(19) Europäisches Patentamt / European Patent Office / Office européen des brevets

(11) **EP 2 930 442 A1**

(12) **EUROPEAN PATENT APPLICATION**
published in accordance with Art. 153(4) EPC

(43) Date of publication:
**14.10.2015 Bulletin 2015/42**

(21) Application number: **13862814.4**

(22) Date of filing: **02.12.2013**

(51) Int Cl.:
***F24F 7/007*** *(2006.01)* ***F24F 11/02*** *(2006.01)*

(86) International application number:
**PCT/JP2013/007048**

(87) International publication number:
**WO 2014/091708 (19.06.2014 Gazette 2014/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.12.2012 JP 2012269642**

(71) Applicant: **Panasonic Intellectual Property Management Co., Ltd.**
**Osaka-shi, Osaka 540-6207 (JP)**

(72) Inventor: **SAKAMOTO, Koji**
**Osaka-shi,**
**Osaka 540-6207 (JP)**

(74) Representative: **Appelt, Christian W.**
**Boehmert & Boehmert**
**Anwaltspartnerschaft mbB**
**Patentanwälte Rechtsanwälte**
**Pettenkoferstrasse 20-22**
**80336 München (DE)**

(54) **AIR-CONDITIONING CONTROL SYSTEM**

(57) An air-conditioning control system includes a ventilation fan (100); a human sensor (200) for human presence detection; a gas sensor (300) for measuring concentration of carbon dioxide; and a control panel (400) as a control device. The control panel (400) controls the ventilation fan (100) based on an output signal of the human sensor (200) and an output signal of the gas sensor (300). The control panel (400) controls the ventilation fan (100) to change an amount of ventilation by the ventilation fan (100) based on the output signal of the human sensor (200) when the concentration of carbon dioxide measured with the gas sensor (300) is below a first threshold.

FIG. 1

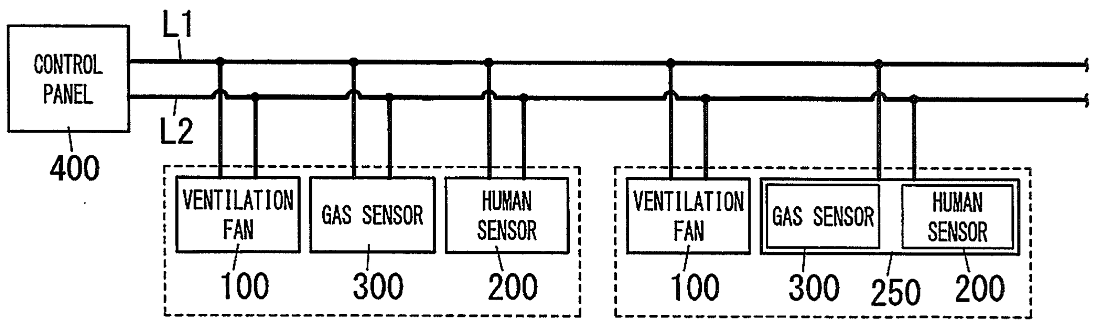




Printed by Jouve, 75001 PARIS (FR)

## Description

### Technical Field

The invention relates to an air-conditioning control system.

### Background Art

As such an air-conditioning control system, there has been proposed an air-conditioning control system equipped with a $CO_2$ sensor (JP Pub. No. 6-109313).

In the air-conditioning control system described in the document, an air-conditioner is divided into an outside air processing system and a circulating processing system. This air-conditioning control system is configured to adjust an amount of supply air by the outside air processing system based on an output signal of the $CO_2$ sensor installed in a room. The air-conditioning control system can also adjust an amount of supply air by the circulating processing system based on an indoor temperature sensor.

The document also describes an air-conditioning control system configured to adjust the amount of supply air by the outside air processing system based on a human sensor configured to count the number of humans entering the room in place of the $CO_2$ sensor.

There is however a concern in the air-conditioning control systems disclosed in the document that energy loss is increased during a heating period and a cooling period because an amount of exhaust air is adjusted while the amount of supply air by the outside air processing system is adjusted based on an output signal of the $CO_2$ sensor or the human sensor and also the amount of supply air by the circulating processing system is adjusted based on the indoor temperature sensor.

### Summary of Invention

It is an object of the present invention to provide an air-conditioning control system capable of preventing an amount of ventilation from exceeding a required amount of ventilation.

An air-conditioning control system of the present invention includes a ventilation fan, a human sensor configured to perform human presence detection, a gas sensor configured to measure concentration of carbon dioxide, and a control device. The control device is configured to control the ventilation fan based on an output signal of the human sensor and an output signal of the gas sensor. The control device is configured to control the ventilation fan to change an amount of ventilation by the ventilation fan based on the output signal of the human sensor when the concentration of carbon dioxide measured with the gas sensor is below a first threshold.

In the air-conditioning control system, preferably the control device is configured to control and operate the ventilation fan regardless of the output signal of the human sensor when the concentration of carbon dioxide measured with the gas sensor is the first threshold or more.

In the air-conditioning control system, preferably the control device is configured, when the concentration of carbon dioxide measured with the gas sensor is below the first threshold, to control the ventilation fan so that the amount of ventilation by the ventilation fan when the human sensor detects human absence becomes smaller than that by the ventilation fan when the human sensor detects human presence.

In the air-conditioning control system, preferably the control device is configured, when the concentration of carbon dioxide measured with the gas sensor is below the first threshold, to control to stop the ventilation fan when the human sensor detects human absence.

In the air-conditioning control system, preferably the control device is configured to control the ventilation fan to change the amount of ventilation by the ventilation fan based on the output signal of the human sensor when the concentration of carbon dioxide measured with the gas sensor is below a second threshold that is lower than the first threshold.

In the air-conditioning control system, preferably the control device is configured, when the concentration of carbon dioxide measured with the gas sensor is below the second threshold, to control the ventilation fan so that the amount of ventilation by the ventilation fan when the human sensor detects human absence becomes smaller than that by the ventilation fan when the human sensor detects human presence.

In the air-conditioning control system, preferably the control device is configured, when the concentration of carbon dioxide measured with the gas sensor is below the second threshold, to control to stop the ventilation fan when the human sensor detects human absence.

In the air-conditioning control system, preferably the control device is configured, when the concentration of carbon dioxide measured with the gas sensor is the first threshold or more, to control the ventilation fan so that the amount of ventilation by the ventilation fan when the human sensor detects human presence becomes greater than that by the ventilation fan when the human sensor detects human absence.

In the air-conditioning control system, preferably the control device is configured, when the concentration of carbon dioxide measured with the gas sensor is the second threshold or more, to control the ventilation fan so that the amount of ventilation by the ventilation fan when the human sensor detects human presence becomes greater than that by the ventilation fan when the human sensor detects human absence.

In the air-conditioning control system, preferably the gas sensor includes a light source, a photodetector, a sample cell disposed between the light source and the photodetector, and a signal processor. Preferably, the photodetector includes a first optical filter which has a transmission band for transmitting infrared light containing an absorption wavelength of carbon dioxide, a first light receiver which is disposed at an opposite side of the first optical filter from the light source, a second optical filter which has a transmission band, without overlapping with the first optical filter, for transmitting infrared light having a reference wavelength as a non-absorption wavelength of carbon dioxide, and a second light receiver which is disposed at an opposite side of the second optical filter from the light source. Preferably, the signal processor is configured to acquire the concentration of carbon dioxide based on a difference or a ratio between an output signal of the first light receiver and an output signal of the second light receiver.

In the air-conditioning control system, preferably the sample cell is shaped like a tube an inner face of which is a reflection surface for reflecting infrared light emitted from the light source. Preferably, the reflection surface is in a shape of a spheroid a rotation axis of which is a major axis defined as a central axis of the sample cell, wherein both ends of the spheroid in a direction of the major axis are cut by two planes perpendicular to the major axis. Preferably, the light source is disposed in vicinity of one focal point of the spheroid on the central axis, and the photodetector is disposed at a position nearer to the light source than another focal point of the spheroid on the central axis.

In the air-conditioning control system, preferably the control device is configured, when operating the ventilation fan, to more decrease the amount of ventilation as the concentration of carbon dioxide measured with the gas sensor is lower.

In the air-conditioning control system, preferably the first threshold is set to permissible concentration of carbon dioxide in a room in which the gas sensor is installed.

The air-conditioning control system of the present invention can prevent an amount of ventilation from exceeding a required amount of ventilation.

## Brief Description of Drawings

Preferred embodiments of the invention will now be described in further details. Other features and advantages of the present invention will become better understood with regard to the following detailed description and accompanying drawings where:

FIG. 1 is a block diagram of an air-conditioning control system in accordance with Embodiment 1;
FIGS. 2A and 2B are illustrative operational diagrams of the air-conditioning control system in accordance with Embodiment 1;
FIGS. 3A and 3B are illustrative operational diagrams of the air-conditioning control system in accordance with Embodiment 1;
FIGS. 4A and 4B are illustrative operational diagrams of the air-conditioning control system in accordance with Embodiment 1;
FIGS. 5A and 5B are illustrative operational diagrams of the air-conditioning control system in accordance with Embodiment 1;
FIGS. 6A and 6B are illustrative operational diagrams of the air-conditioning control system in accordance with Embodiment 1;
FIGS. 7A and 7B are illustrative operational diagrams of the air-conditioning control system in accordance with Embodiment 1;
FIGS. 8A and 8B are illustrative operational diagrams of the air-conditioning control system in accordance with Embodiment 1;
FIGS. 9A and 9B are illustrative operational diagrams of the air-conditioning control system in accordance with Embodiment 1;
FIGS. 10A and 10B are illustrative operational diagrams of the air-conditioning control system in accordance with Embodiment 1;
FIGS. 11A and 11B are illustrative operational diagrams of the air-conditioning control system in accordance with Embodiment 1;
FIGS. 12A and 12B are illustrative operational diagrams of the air-conditioning control system in accordance with Embodiment 1;
FIGS. 13A and 13B are illustrative operational diagrams of the air-conditioning control system in accordance with Embodiment 1;
FIGS. 14A and 14B are illustrative operational diagrams of the air-conditioning control system in accordance with Embodiment 1;
FIGS. 15A and 15B are illustrative operational diagrams of the air-conditioning control system in accordance with Embodiment 1;
FIGS. 16A and 16B are illustrative operational diagrams of the air-conditioning control system in accordance with Embodiment 1;
FIGS. 17A and 17B are illustrative operational diagrams of the air-conditioning control system in accordance with Embodiment 1;
FIGS. 18A and 18B are illustrative operational diagrams of the air-conditioning control system in accordance with Embodiment 1;
FIGS. 19A and 19B are illustrative operational diagrams of the air-conditioning control system in accordance with Embodiment 1;
FIGS. 20A and 20B are illustrative operational diagrams of the air-conditioning control system in accordance with Embodiment 1;
FIGS. 21A and 21B are illustrative operational diagrams of the air-conditioning control system in accordance with Embodiment 1;
FIGS. 22A and 22B are illustrative operational diagrams of the air-conditioning control system in accordance with Embodiment 1;
FIGS. 23A and 23B are illustrative operational diagrams of the air-conditioning control system in accordance with Embodiment 1;

FIG. 24 is a schematic block diagram of a gas sensor in the air-conditioning control system in accordance with Embodiment 1;

FIG. 25 is an exploded perspective view of main parts of the gas sensor in the air-conditioning control system in accordance with Embodiment 1;

FIG. 26A is a perspective view of main parts of the gas sensor in the air-conditioning control system in accordance with Embodiment 1, and FIG. 26B is a partially broken perspective view of main parts of the gas sensor in the air-conditioning control system in accordance with Embodiment 1;

FIG. 27 is a schematic diagram of the gas sensor in the air-conditioning control system in accordance with Embodiment 1;

FIG. 28A is a schematic plan view of a light source of the gas sensor in the air-conditioning control system in accordance with Embodiment 1, and FIG. 28B is a schematic sectional view taken along an X-X' line in FIG. 28A;

FIG. 29 is a view illustrating a photodetector of the gas sensor in the air-conditioning control system in accordance with Embodiment 1;

FIG. 30 is an illustrative operational diagram of the gas sensor in the air-conditioning control system in accordance with Embodiment 1;

FIG. 31 is an illustrative operational diagram of the gas sensor in the air-conditioning control system in accordance with Embodiment 1;

FIG. 32 is a block diagram of another configuration example of the air-conditioning control system in accordance with Embodiment 1;

FIG. 33 is a block diagram of still another configuration example of the air-conditioning control system in accordance with Embodiment 1;

FIG. 34 is a block diagram of an air-conditioning control system in accordance with Embodiment 2;

FIG. 35 is a block diagram of an air-conditioning control system in accordance with Embodiment 3;

FIG. 36 is a block diagram of an air-conditioning control system in accordance with Embodiment 4; and

FIG. 37 is a block diagram of an air-conditioning control system in accordance with Embodiment 5.

**Description of Embodiments**

(Embodiment 1)

An air-conditioning control system in accordance with a present embodiment will be hereinafter explained with reference to FIG. 1.

As shown in FIG. 1, the air-conditioning control system includes one or more ventilation fans 100, one or more human sensors 200 each of which is configured to perform human presence detection, one or more gas sensors 300 each of which is configured to measure concentration of carbon dioxide (hereinafter also called "$CO_2$"), and a control panel 400. In an example where a plurality of rooms is present in a building in which the air-conditioning control system is installed, the ventilation fan 100, the human sensor 200 and the gas sensor 300 are disposed one each in each room as shown in FIG. 1. The control panel 400 is a control device. Based on an output signal of each human sensor 200 and an output signal of a gas sensor 300 in an identical room in which the corresponding human sensor 200 is installed, the control device controls a ventilation fan 100 in the identical room. In this example, when concentration of carbon dioxide measured with the gas sensor 300 is below a first threshold TH1 (see FIGS. 2A and 2B), the control panel 400 controls the ventilation fan 100 to change an amount of ventilation by the ventilation fan 100 based on the output signal of the human sensor 200. In FIG. 1, each quadrilateral depicted by a broken line schematically shows a spatial border such as a room.

The air-conditioning control system can accordingly prevent an amount of ventilation from exceeding a required amount of ventilation. For example, the air-conditioning control system can prevent energy for heating from being wasted during a heating period and contribute to reduction in energy consumption of an air-conditioner during the heating period. The air-conditioning control system can also prevent energy for cooling from being wasted during a cooling period and contribute to reduction in energy consumption of the air-conditioner during the cooling period.

Examples of structure of an object in which the air-conditioning control system is installed include, but not limited to, a building, a hospital, a school, a house and the like.

For example, in Japan, 1000ppm or less is regulated as a standard of concentration of carbon dioxide by both Building Standards Act and Law for Maintenance of Sanitation in Buildings (called "Building Hygieiology" or "Law for Building Sanitation Management") in regard to the standard of concentration of carbon dioxide in a room of a building. Permissible concentration of 1000ppm (an upper limit) is not maximum allowable concentration just for $CO_2$ but means allowable concentration as a pollution index when it is supposed that physical and chemical properties of air are degraded in proportion to an increase in $CO_2$. For example, regarding a standard of carbon dioxide in a schoolroom in Japan, carbon dioxide of 1500ppm or less is regulated as a desirable ventilation standard by standard for school environmental sanitation (from April 1, 2009) regulated based on 6(1) School Health & Safety Act (Code Title 56 in 1958).

It is preferable that the first threshold TH1 be set to permissible concentration of carbon dioxide in a room in which the gas sensor 300 of the air-conditioning control system is installed. The air-conditioning control system can accordingly prevent concentration of carbon dioxide contained in air in a room which the gas sensor 300 is installed in from exceeding the permissible concentration. The first threshold TH1 may be set to, e.g., 1000ppm in a case where the air-conditioning control system is installed in a building, and set to, e.g., 1500ppm in a case where the air-conditioning control system is installed in a school. The first threshold TH1 may be set to, e.g., 1000ppm in a case where the air-conditioning control system is installed in a hospital or a house. It is preferable that when a standard with respect to a building to which the air-conditioning control system is applied is regulated by an Act in a country or the like where the building is constructed, the first threshold TH1 of the air-conditioning control system be set to meet the standard. The first threshold TH1 is not limited to the permissible concentration of carbon dioxide, but may be the permissible concentration or less, preferably a value close to the permissible concentration, for example, 90% or more of the permissible concentration.

A ventilation fan 100 is installed in each room and the like in a building. The ventilation fan 100 is a ventilation facility used for exchange of air (ventilation) between indoor and outdoor, and configured to create a current of air by rotating blades or the like with a motor. Thus, the ventilation fan 100 can discharge air in a room into the outside, thereby reducing concentration of carbon dioxide in the room. The ventilation fan 100 may be configured to stepwise change an amount of ventilation (an amount of exhaust air) thereof, or continuously change the amount of ventilation. The ventilation fan 100 is an exhaust type, for example. The ventilation fan 100 is connected to the control panel 400 through a power supply line L1 and a signal line L2. In a case where a plurality of ventilation fans 100 is provided as shown in FIG. 1, different unique addresses are preferably set to the respective ventilation fans 100 in the air-conditioning control system so as to allow the control panel 400 to individually control the ventilation fans 100, for example. By connecting the ventilation fans 100 with the control panel 400 via signal lines, the air-conditioning control system may be configured to control the ventilation fans 100 to change an amount of ventilation by each ventilation fan 100.

For example, a human sensor 200 is installed in each room and the like in the building. The human sensor 200 is a sensor configured to perform human presence detection in a room in which the human sensor 200 is installed. An infrared human sensor configured to perform human presence detection by infrared radiated from a human can be employed as the human sensor 200, for example. Preferably, the infrared human sensor is formed of an infrared detector and a lens. Examples of the infrared detector include a pyroelectric detector, a thermopile, a resistance type bolometer and the like. Preferably, the pyroelectric detector is a quad device including four light receivers, or a dual device including two light receivers. An ultrasound type of human sensor configured to perform human presence detection by ultrasonic waves may be employed as the human sensor 200. It is preferable that the human sensor 200 be a human sensor formed by combining the pyroelectric detector with Fresnel lens in view of reduction in electric power consumption. The human sensor 200 is connected to the control panel 400 through the power supply line L1 and the signal line L2. In a case where a plurality of human sensors 200 is provided as shown in FIG. 1, different unique addresses are preferably set to the respective human sensors 200 in the air-conditioning control system so as to allow the control panel 400 to individually identify output signals of the human sensors 200 with the output signals related to the respective human sensor 200, for example. In the air-conditioning control system, though a ventilation fan 100 and a human sensor 200 are connected to one signal line L2, a signal line (not shown) may be provided separately from the signal line L2 to which the ventilation fan 100 is connected, and be connected with the human sensor 200. In the air-conditioning control system, a composite sensor device 250 including a human sensor 200 and a gas sensor 300 may be connected to the signal line L2. The composite sensor device 250 may have a common unique address as unique addresses of the human sensor 200 and the gas sensor 300 included in the composite sensor device 250, or may have separate addresses.

For example, the control panel 400 is installed in a disaster prevention center, a management room or the like in the building. The control panel 400 is configured to receive output signals of the gas sensors 300 and output signals of the human sensors 200 to control a ventilation fan 100 individually for each of the rooms based on respective output signals of a gas sensor 300 and a human sensor 200 in a corresponding room.

The control panel 400 applies a prescribed voltage to each ventilation fan 100, each human sensor 200 and each gas sensor 300 through the power supply line L1. Examples of the prescribed voltage include DC 12V, AC 24V, AC 100V and the like.

The control panel 400 also receives respective output signals of the human sensors 200 and respective output signals of the gas sensors 300 via the signal line L2 to transmit a control signal containing indication data of an amount of ventilation and address data to each ventilation fan 100 via the signal line L2. A unique address is allocated to each ventilation fan 100. Each ventilation fan is configured, if the address data in the control signal coincides with its own unique address, to acquire the indication data of the amount of ventilation contained in the control signal to control its own amount of ventilation based on the acquired indication data. For example, when including a motor driver circuit for driving a motor, the ventilation fan 100 can adjust the amount of ventilation by controlling a revolution speed of the motor through the motor driver circuit. The motor driver circuit may adjust the amount of ventilation by varying a voltage to be applied to the motor or by driving the motor by PWM control, for example. The indication data may be data for directly indicating the amount of ventilation, a function representing the amount of ventilation, or data for indicating switch in air volume or ON and OFF of the ventilation fan 100.

The control panel 400 includes a storage device (not shown) configured to store the first threshold TH1, a signal generator (not shown) configured to generate the control signal based on the respective output signals of the human sensors 200 and the respective output signals of the gas sensors 300, and the like.

The air-conditioning control system may store a second threshold TH2 lower than the first threshold TH1 (e.g., FIGS. 15A to 23B) besides the first threshold TH1 for the concentration of carbon dioxide, in the control panel 400.

For example, it is preferable that the control panel 400 control and operate each ventilation fan 100 (see e.g., FIGS. 2 to 23) regardless of an output signal of a corresponding human sensor 200 (human presence detection) when concentration of carbon dioxide measured with a corresponding gas sensor 300 is the first threshold TH1 or more. The air-conditioning control system can accordingly avoid concentration of carbon dioxide contained in air in each room being kept to be the first threshold TH1 or more. A relation between concentration of carbon dioxide and an amount of ventilation when a human sensor 200 detects human presence (when human presence is detected) is schematically shown in each of FIGS. 2A, 3A, 4A, 5A, 6A, 7A, 8A, 9A, 10A, 11A, 12A, 13A, 14A, 15A, 16A, 17A, 18A, 19A, 20A, 21A, 22A and 23A. A relation between concentration of carbon dioxide and an amount of ventilation when a human sensor 200 detects human absence (when human absence is detected) is schematically shown in each of FIGS. 2B, 3B, 4B, 5B, 6B, 7B, 8B, 9B, 10B, 11B, 12B, 13B, 14B, 15B, 16B, 17B, 18B, 19B, 20B, 21B, 22B, and 23B.

It is preferable that when concentration of carbon dioxide measured with each gas sensor 300 is below the first threshold TH1, the control panel 400 control a corresponding ventilation fan 100 so that an amount of ventilation by the ventilation fan 100 when a corresponding human sensor 200 detects human absence becomes smaller than that by the ventilation fan 100 when the human sensor detects human presence (see, e.g., FIGS. 2A to 12B, 15A to 20B). The air-conditioning control system can accordingly prevent the amount of ventilation from exceeding a required amount of ventilation. Making the amount of ventilation by the ventilation fan 100 smaller includes a concept that the amount of ventilation is made zero. The amount of ventilation can be made zero by stopping the ventilation fan 100. In short, when concentration of carbon dioxide measured with each gas sensor 300 is below the first threshold TH1, the control panel 400 may control a corresponding ventilation fan 100 so as to stop the ventilation fan 100 when a corresponding human sensor 200 detects human absence (see FIGS. 2A, 2B, 9A to 12B, 19A, 19B, 20A, 20B, 23A and 23B). The air-conditioning control system can accordingly prevent the amount of ventilation from exceeding the required amount of ventilation.

When concentration of carbon dioxide measured with each gas sensor 300 is the first threshold TH1 or more, the control panel 400 may control a corresponding ventilation fan 100 so that an amount of ventilation by the ventilation fan 100 when a corresponding human sensor 200 detects human presence becomes greater than that by the ventilation fan 100 when the human sensor 200 detects human absence (see FIGS. 13A, 13B, 14A, 14B, and 21A to 23B). The air-conditioning control system can accordingly prevent concentration of carbon dioxide contained in air in each room from rising.

When operating a ventilation fan 100, the control panel 400 may more decrease the amount of ventilation as the concentration of carbon dioxide measured with a corresponding gas sensor 300 is lower (see FIGS. 4A, 4B, 6A, 6B, 11A, 11B, 14A, 14B, 16A, 16B, 18A, 18B, 22A, and 22B). The air-conditioning control system can accordingly prevent the amount of ventilation from exceeding the required amount of ventilation.

When concentration of carbon dioxide measured with each gas sensor 300 is below the second threshold TH2 that is lower than the first threshold TH1, the control panel 400 may control a corresponding ventilation fan 100 to change the amount of ventilation by the ventilation fan 100 based on an output signal of a corresponding human sensor 200 (FIGS. 15A to 20B, 23A and 23B). The air-conditioning control system can accordingly prevent the amount of ventilation from exceeding the required amount of ventilation.

It is preferable that when concentration of carbon dioxide measured with each gas sensor 300 is below the second threshold TH2, the control panel 400 control a corresponding ventilation fan 100 so that the amount of ventilation by the ventilation fan 100 when a corresponding human sensor 200 detects human absence becomes smaller than that by the ventilation fan when the human sensor 200 detects human presence (FIGS. 15A to 20B, 23A and 23B). The air-conditioning control system can accordingly attain energy saving. Making the amount of ventilation by the ventilation fan 100 smaller includes a concept that the amount of ventilation is made zero. The amount of ventilation can be made zero by stopping the ventilation fan 100. In short, when concentration of carbon dioxide measured with each gas sensor 300 is below the second threshold TH2, the control panel 400 may control a corresponding ventilation fan 100 so as to stop the ventilation fan 100 when a corresponding human sensor 200 detects human absence (FIGS. 19A, 19B, 20A, 20B, 23A and 23B). The air-conditioning control system can accordingly prevent the amount of ventilation from exceeding the required amount of ventilation.

When concentration of carbon dioxide measured with each gas sensor 300 is the first threshold TH1 or more, the control panel 400 may control a corresponding ventilation fan 100 so that the amount of ventilation by the ventilation fan 100 when a corresponding human sensor 200 detects human presence becomes greater than that by the ventilation fan when the human sensor 200 detects human absence (FIGS. 13A, 13B, 14A, 14B

and 21A to 23B).

When concentration of carbon dioxide measured with each gas sensor 300 is the second threshold TH2 or more, the control panel 400 may control a corresponding ventilation fan 100 so that the amount of ventilation by the ventilation fan 100 when a corresponding human sensor 200 detects human presence becomes greater than that by the ventilation fan when the human sensor 200 detects human absence (FIGS. 17A, 17B, 18A, 18B and 21A to 23B).

The gas sensor 300 may be an infrared gas sensor. The infrared gas sensor has advantages such as high discrimination and a long lifetime in comparison with a semiconductor gas sensor in which oxide semiconductor is employed as sensor material.

The infrared gas sensor is to measure concentration of detection target gas by measuring absorbance of infrared light an absorption wavelength of which is determined by numerator structure of the detection target gas.

According to Lambert-Beers' law, the absorbance D is given by a following Expression (1):

$$D = -\log_{10}(I/I_0), \qquad (1)$$

where $I_0$ is intensity of light entering substance, and I is intensity of light after passing through the substance by an optical path length L.

According to Lambert-Beers' law, the absorbance D is also given by a following Expression (2):

$$D = \alpha CL, \qquad (2)$$

where $\alpha$ is an absorption coefficient inherent in substance (a constant determined by an absorption wavelength by the substance and a temperature), C is concentration of the substance, and L is the optical path length. As can be seen from Expression (2), the absorbance D is proportional to the concentration of the substance C and the optical path length L.

Transmittance T is represented by Expression (3) below:

$$T = I_0/I. \qquad (3)$$

From Expressions (2) and (3), transmittance T is given by Expression (4) below:

$$T = 10^{-D} = 10^{-\alpha CL}. \qquad (4)$$

An amount of received light I is therefore calculated by Expression (5) below:

$$I = P \times 10^{-\alpha CL}, \quad (5)$$

where P is an amount of infrared light having a wavelength $\lambda$, emitted from the light source, and I is an amount of infrared light received by a light detector after passing through gas to be measured by optical path length L (received light power). As can be seen from Expression (5), a relation between the amount of received light I and the concentration of the detection target gas becomes a curve in which the amount of received light I is gradually attenuated as the concentration of the detection target gas becomes higher. The infrared gas sensor can accordingly measure the concentration of the detection target gas by measuring attenuation of the amount of received light I.

For example, absorption wavelengths of $CH_4$ (methane), $CO_2$ (carbon dioxide), CO (carbon monoxide) and NO (nitric monoxide) are 3.3$\mu$m, 4.3$\mu$m, 4.7$\mu$m and 5.3$\mu$m, respectively.

As shown in FIG. 24, the gas sensor 300 includes a light source 1, a photodetector 2, a sample cell 3 disposed between the light source 1 and the photodetector 2, a signal processor 40, and a driver circuit 50 configured to light the light source 1. In FIG. 24, lines X1 and X2 having arrows schematically depict infrared light propagation paths, emitted from the light source 1.

The light source 1 may be an infrared light source configured to emit infrared light. The photodetector 2 may be a photoelectric transducer configured to receive the infrared light to perform photoelectric conversion. The sample cell 3 may be a cell into which gas containing the detection target gas is introduced as sample gas. The gas sensor 300 is configured to modulate intensity of infrared light emitted from the light source 1 with the driver circuit 50. The driver circuit 50 is configured to cyclically change the intensity of light emitted from the light source 1 at a prescribed period, but may be configured to continuously or intermittently change it. The signal processor 40 includes an amplifier circuit 41 configured to amplify an output signal of the photodetector 2, and a signal processing circuit 42 configured to acquire concentration of the detection target gas based on the output signal amplified through the amplifier circuit 41.

For high precision measurement, the infrared gas sensor requires correcting error caused by miscellaneous gases, dispersion in output power of the light source, time degradation of the light source 1, dirt or time degradation of the sample cell 3, or the like.

It is therefore preferable that the photodetector 2 of the gas sensor 300 include a first optical filter 31, a first light receiver 2A, a second optical filter 32 and a second light receiver 2B, and that the signal processor 40 be configured to calculate concentration of carbon dioxide based on a difference or a ratio between an output signal of the first light receiver 2A and an output signal of the second light receiver 2B.

The first optical filter 31 may have a transmission band that is set to transmit infrared light having an absorption wavelength of carbon dioxide $\lambda_1$ as shown in FIG. 29 (see a spectral characteristic depicted by a solid line Y1 in FIG. 29). The absorption wavelength of carbon dioxide $\lambda_1$ is 4.3$\mu$m. The first light receiver 2A is disposed at an opposite side of the first optical filter 31 from the light source 1. Preferably, the second optical filter 32 has a transmission band, without overlapping with the first optical filter 31, for transmitting infrared light having a reference wavelength $\lambda_2$ (see FIG. 29) as a non-absorption wavelength of carbon dioxide (see a spectral characteristic depicted by a dashed line Y2 in FIG. 29). For example, the reference wavelength $\lambda_2$ may be set to 3.9$\mu$m. The second light receiver 2B is disposed at an opposite side of the second optical filter 32 from the light source 1. A difference between the output signal of the first light receiver 2A and the output signal of the second light receiver 2B therefore corresponds to a value of concentration of carbon dioxide. As a result, the gas sensor 300 can accurately calculate the concentration of carbon dioxide through the signal processor 40. FIG. 30 schematically shows the output signal A1 of the first light receiver 2A and the output signal A2 of the second light receiver 2B when the concentration of carbon dioxide increases according to passage of time as shown by a dotted line A0. FIG. 31 schematically shows the output signal A1 of the first light receiver 2A and the output signal A2 of the second light receiver 2B when the concentration of carbon dioxide is constant and the output of the light source 1 decreases owing to time degradation for example.

It is preferable that the photodetector 2 include at least two sets each of which is formed of a light receiver and an optical filter disposed in front of the light receiver wherein the light receivers have an identical configuration, the optical filters have different transmission bands, one of the optical filters has a spectral characteristic that is allowed to pass through $CO_2$, and any other of the optical filters has a spectral characteristic that is prohibited from passing through $CO_2$. When including three or more sets of light receivers and optical filters, the photodetector 2 can detect respective concentration of two kinds of detection target gases. That is, the gas sensor 300 can detect concentration of carbon dioxide and concentration of another gas (e.g., carbon monoxide or the like).

Preferably, the light source 1 is configured to emit infrared light having a prescribed wavelength region containing an absorption wavelength of $CO_2$. For example, when the gas sensor 300 measures only concentration of carbon dioxide, the prescribed wavelength region may be a wavelength region containing a reference wavelength as a non-absorption wavelength of $CO_2$ (e.g., 3.9$\mu$m) and an absorption wavelength of $CO_2$ (4.3$\mu$m). The reference wavelength is preferably a non-absorption wavelength of not only $CO_2$ but also gas except for $CO_2$ ($H_20$, $CH_4$, CO, NO or the like).

For example, the light source 1 may include an infrared emitting device 51 configured to emit infrared light, and a package 1p that houses the infrared emitting device 51, and has a configuration in which a window hole 1r is provided in front of the infrared emitting device 51 and the window hole 1r is closed with a window member 1w. For example, as shown in FIGS. 28A and 28B, the infrared emitting device 51 may be formed of a substrate 52, a thin film part 53 provided on a surface side of the substrate 52, a hole 52a that pierces the substrate 52 in a thickness direction thereof, an infrared emitting layer 54 provided at an opposite side of the thin film part 53 from the substrate 52, a protective layer 55 that covers the infrared emitting layer 54 on an opposite side of the thin film part 53 from the substrate 52, and pads 59 that are electrically connected to the infrared emitting layer 54. The protective layer 55 is formed of material that allows infrared light emitted from the infrared emitting layer 54 to pass through. The infrared emitting layer 54 is electrically connected to the pads 59 via conductor lines 58.

In the infrared emitting device 51, if the infrared emitting layer 54 is energized, the infrared emitting layer 54 generates heat and infrared light is emitted from the infrared emitting layer 54.

Examples of the substrate 52 include a single crystalline silicon substrate, a polycrystalline silicon substrate and the like.

For example, the thin film part 53 may be formed of layered films including a silicon oxide film 531 on the substrate 52 side, and a silicon nitride film 532 laminated at an opposite side of the silicon oxide film 531 from the substrate 52. For example, the thin film part 53 may have single layer structure of a silicon oxide film or a silicon nitride film.

Examples of material of the infrared emitting layer 54 include tantalum nitride, titanium nitride, nickel chrome, tungsten, titanium, thorium, platinum, zirconium, chromium, vanadium, rhodium, hafnium, ruthenium, boron, iridium, niobium, molybdenum, tantalum, osmium, rhenium, nickel, holmium, cobalt, erbium, yttrium, iron, scandium, thulium, palladium, lutetium, conductive polysilicon, and the like.

By adjusting input power given between pads 59 from the driver circuit 50, the infrared emitting device 51 can vary Joule heat generated by the infrared emitting layer 54 and temperature of the infrared emitting layer 54. The infrared emitting device 51 can accordingly vary a peak wavelength $\lambda$ of infrared light emitted from the infrared emitting layer 54 by varying the temperature of the infrared emitting layer 54.

For example, an infrared-emitting diode for bare chip, configured to emit infrared light may be employed as the infrared emitting device 51.

For example, a can package may be employed as the package 1p. The can package may include a stem 1a on which the infrared emitting device 51 is mounted, and a cap 1b that covers the infrared emitting device 51 and is fixed to the stem 1a, and have a configuration in which the window hole 1r is formed in the cap 1b in front of the infrared emitting device 51. The stem 1a is provided with pins 1d for supplying power to the infrared emitting device 51 with the pins piercing the stem in a thickness direction thereof.

The light source 1 is not limited to the configuration including the infrared emitting device 51 and the package 1p, but may be a halogen lamp or the like.

It is preferable that the photodetector 2 include a package 2p in which the first light receiver 2A and the second light receiver 2B are housed. In this case, the photodetector 2 may have window holes 2c and 2c which are in the package 2p in front of the first light receiver 2A and the second light receiver 2B, respectively, and which are closed with the first optical filter 31 and the second optical filter 32, respectively. Preferably, the first light receiver 2A and the second light receiver 2B are arranged side by side. Each of the first light receiver 2A and the second light receiver 2B is formed of first and second electrodes 2h and 2i that are respectively formed at front and back sides of a pyroelectric substrate 2g on opposite faces, and part of the pyroelectric substrate 2g intervened between the first and second electrodes 2h and 2i. For example, a single crystalline $LiTaO_3$ substrate may be employed as the pyroelectric substrate 2g. Material of the pyroelectric substrate 2g to be employed is not limited to $LiTaO_3$, but may be $LiNbO_3$, $PbTiO_3$, PZT, PZT-PMN(:Pb(Zr, Ti)$O_3$-Pb(Mn, Nb)$O_3$) or the like. Each of the first and second electrodes 2h and 2i may be formed of a conducting film that has electric conductivity and absorption property of infrared light as a detection target. The conducting film is formed of a NiCr film. The conducting film is not limited to the NiCr film, but may be a Ni film, a niello film or the like for example.

It is preferable that the first and second light receivers 2A and 2B be arranged in point symmetry on a plane perpendicular to an optical axis of the light source 1 with respect to a center that is an intersection point of the optical axis and the plane. The photodetector 2 may be formed of the first and second light receivers 2A and 2B including individual pyroelectric substrates 2g, or the first and second light receivers 2A and 2B including one pyroelectric substrate 2g. The first and second light receivers 2A and 2B of the photodetector 2 are electrically connected in reverse series. The amplifier circuit 41 can accordingly amplify the difference between the output signal of the first light receiver 2A and the output signal of the second light receiver 2B. In the photodetector 2, two first and second light receivers 2A and 2B as one set, having different polarity, are connected in reverse series. It is according possible to cancel DC bias components of the two first and second light receivers 2A and 2B constituting the set. Each DC bias component is a bias component caused by miscellaneous gases or external light such as sunlight. The gas sensor 300 can therefore increase a gain of the amplifier circuit 41 and provide an improved S/N ratio. In the photodetector 2, the first and second light receivers 2A and 2B are electrically connected in reverse series, but not limited to this. They may be connected in reverse parallel.

The amplifier circuit 41 and the signal processing circuit 42 are provided separately from the photodetector 2, but not limited to this. They may be housed in the package 2p of the photodetector 2. In this case, the gas sensor 300 can be miniaturized by integrating the amplifier circuit 41 and the signal processing circuit 42 into one chip IC device.

For example, each of the first and second optical filters 31 and 32 may be formed of a substrate that allows infrared light to pass through, and a narrow-band transmission filter (a band-pass filter) formed on a surface side of the substrate. Examples of the substrate include a silicon substrate, a germanium substrate, a sapphire substrate, a magnesium oxide substrate and the like.

The photodetector 2 may be formed of the first and second optical filters 31 and 32 including individual substrates, or two narrow-band transmission filters including one substrate.

Each narrow-band transmission filter is configured to selectively transmit infrared light having a particular (selective) wavelength that is different from that of other filter. For example, each narrow-band transmission filter may be formed of a first $\lambda/4$ multilayer, a wavelength selecting layer and a second $\lambda/4$ multilayer. The first $\lambda/4$ multilayer is a multilayer formed of multiple kinds of layered thin films having different refractive indexes and an identical optical film thickness. The second $\lambda/4$ multilayer is a multilayer formed of multiple kinds of layered thin films. The wavelength selecting layer is intervened between the first $\lambda/4$ multilayer and the second $\lambda/4$ multilayer. An optical film thickness of the wavelength selecting layer differs from each optical film thickness of the thin films in response to the particular wavelength. Each of the first $\lambda/4$ multilayer and the second $\lambda/4$ multilayer preferably has refractive index periodical structure, and may be formed of three or more kinds of layered thin films. Examples of material of each thin film include Ge, Si, $MgF_2$, $Al_2O_3$, SiOx, $Ta_2O_5$, SiNx and the like.

The particular wavelength of the narrow-band transmission filter in the first optical filter 31 is 4.3$\mu$m, and the particular wavelength of the narrow-band transmission filter in the second optical filter 32 is, e.g., 3.9$\mu$m.

For example, a can package may be employed as the package 2p of the photodetector 2. The can package may include a stem 2a that the first and second light receivers 2A and 2B are disposed on a surface side thereof, and a cap 2b that covers the first and second light receivers 2A and 2B and is fixed to the stem 2a, and have a configuration in which the window holes 2c and 2c are formed in the cap 2b in front of the first and second light receivers 2A and 2B, respectively. The stem 2a is provided with lead pins 2d with the lead pins piercing the stem in a thickness direction thereof. For example, the number of the lead pins 2d may be three. In this case, two lead pins 2d can be used for signal output and a remaining one lead pin 2d ca be used for Ground.

The sample cell 3 of the gas sensor 300 is now explained with reference to FIGS. 24 to 27.

The sample cell 3 is shaped like a tube. Preferably, the sample cell 3 is formed with a plurality of vent holes 9, connecting an internal space of the sample cell to an outside, with the vent holes pierced in the sample cell 3 in a direction perpendicular to an axial direction thereof. When the sample cell 3 is in the shape of a cylinder, the vent holes 9 are preferably pierced in the sample cell 3 in a radial direction of thereof. The sample cell 3 allows gas from the outside to be introduced therein through the vent holes 9 and also to discharge outside air in the internal space. The gas from the outside is air in a room in which the gas sensor 300 is installed.

In the gas sensor 300, the light source 1 is disposed at one end (hereinafter called a "first end") of the sample cell 3 in the axial direction, while the photodetector 2 is disposed at another end (hereinafter called a "second end") of the sample cell 3 in the axial direction. Air in the room can be introduced into the internal space of the sample cell 3 via the vent holes 9 of the gas sensor 300. As a result, an amount of infrared light entering the photodetector 2 decreases according to an increase in the concentration of carbon dioxide contained in the air in the internal space of the sample cell 3. The amount of infrared light entering the photodetector 2 increases according to a decrease in the concentration of carbon dioxide contained in the air in the internal space of the sample cell 3.

The sample cell 3 is formed by combining a pair of half bodies 4 and 5 (see FIG. 25) divided along a plane including a central axis OX (see FIG. 27) of the sample cell 3. The half bodies 4 and 5 can be combined together by a technology selected from the group consisting of fitting, ultrasonic welding and glueing.

It is preferable that the sample cell 3 also function as an optical element for reflecting infrared light emitted from the light source 1 into the photodetector 2 side. As an example, when the sample cell 3 is made from synthetic resin, a reflecting layer for reflecting infrared light may be provided inside the sample cell.

Material of the sample cell 3 is not limited to the synthetic resin, but metal may be employed as the material. In a case where the sample cell 3 is made of metal having a comparatively high reflectivity with respect to infrared light having a particular wavelength, the reflecting layer may be provided or not provided.

In short, it is preferable that the sample cell 3 be shaped like a tube an inner face of which is a reflection surface 6 for reflecting infrared light emitted from the light source 1. When the reflecting layer is provided, a surface of the reflecting layer can form the reflection surface 6. In FIG. 27, lines with arrows X3, X4 and X5 schematically depict infrared light propagation paths, emitted from the light source 1.

The gas sensor 300 may include a first holding member 10 that holds the light source 1. The first holding member 10 is attached to the sample cell 3. The gas sensor 300 may also include a second holding member 20 that holds the photodetector 2. The second holding member 20 is also attached to the sample cell 3.

The first holding member 10 is formed of a cap 11 and a presser plate 12. The cap 11 is shaped like a disc. A cavity 11a into which the first end of the sample cell 3 is fit is provided in an end face of the cap on the sample cell 3 side. A through hole 11b into which the light source 1 is fit is provided in the center of a bottom of the cavity 11a. The presser plate 12 is used to press the light source 1 against the cap 11.

Three mounting screws (not shown) passing through three holes 12b of the presser plate 12 and three holes 11d of the cap 11 are screwed into respective three threaded portions 4d, 5d and 6d of the first end of the sample cell 3, and thereby the first holding member 10 is attached to the sample cell 3.

The second holding member 20 is formed of a cap 21 and a presser plate 22. The cap 21 is shaped like a disc. A cavity 21a into which the second end of the sample cell 3 is fit is provided in an end face of the cap on the sample cell 3 side. A through hole 21b into which the photodetector 2 is fit is provided in the center of a bottom of the cavity 21a. The presser plate 22 is used to press the photodetector 2 against the cap 21.

Three mounting screws (not shown) passing through three holes 22b of the presser plate 22 and three holes 21c (only one is shown in FIG. 25) of the cap 21 are screwed into respective three threaded portions (not shown) of the second end of the sample cell 3, and thereby the second holding member 20 is attached to the sample cell 3.

Each structure of the first and second holding members 10 and 20 is not limited thereto in particular. Each attachment structure of the first and second holding members 10 and 20 to the sample cell 3 is also not limited thereto in particular.

The reflection surface 6 of the sample cell 3 is in a shape of a spheroid a rotation axis of which is a major axis defined as a central axis OX of the sample cell 3 where both ends of the spheroid in a direction of the major axis are cut by two planes VP1 and VP2 (see FIG. 27) perpendicular to the major axis. Thus, the sample cell 3 has the internal space corresponding to part of the spheroid (long ellipsoid).

In the gas sensor 300, it is preferable that the light source 1 be disposed at one focal point (a first focal point) P1 of the spheroid on the central axis OX of the sample cell 3, and that the photodetector 2 be disposed at a position nearer to the light source 1 than another focal point (a second focal point) of the spheroid on the central axis OX of the sample cell 3.

The light source 1 of the gas sensor 300 is disposed in the vicinity of the first focal point P1 of the spheroid. The "vicinity" means a subset formed of all points in which a distance between the light source 1 and each of the all points in the vicinity of the first focal point P1 is smaller than a prescribed value, and includes a point corresponding to the first focal point P1. The prescribed value may be varied according to a distance between the first focal point P1 and the second focal point P2 of the spheroid. In short, the light source 1 is not required to be exactly disposed at the first focal point P1, but may be at a position that is regarded as substantially the first focal point P1. Oblique component of infrared light emitted from the light source 1 is to be reflected in the reflection surface 6 to be guided and concentrated at the second focal point P2. However, in a gas sensor as a comparison example in which the photodetector 2 is disposed at the second focal point P2, infrared light is liable to have a large angle of incidence when infrared light is reflected in the reflection surface 6 on the second end of the sample cell 3 to enter the first optical filter 31 and the second optical filter 32. In the first optical filter 31 and the second optical filter 32, as the angle of incidence becomes larger, a shift of a spectral characteristic (transmittance-wavelength characteristic) to a small wavelength side becomes larger. As a result, infrared transmittance in a particular wavelength region containing a selective wavelength is reduced. That is, the gas sensor as the comparison example has a concern about a reduction in S/N ratio. On the other hand, a longer distance between the sample cell 3 and the photodetector 2 in a direction of the central axis OX of the sample cell 3 causes a larger loss of infrared light.

In the gas sensor 300 of the embodiment, the photodetector 2 is disposed at a position nearer to the light source 1 than the second focal point P2 of the reflection surface on the central axis OX of the sample cell 3. That is, the optical filters and the light receivers 2A and 2B are at a position nearer to the light source 1 than the second focal point P2 in a direction of the central axis OX of the sample cell 3, and the photodetector 2 is disposed between the sample cell 3 and the second focal point P2. It is accordingly possible to decrease an angle of incidence of infrared light entering the optical filters following reflection in the reflection surface 6 on the second end of the sample cell 3 in comparison with the comparison example in a case where a distance between the sample cell 3 and the photodetector 2 in the direction of the central axis OX of the sample cell 3 is the same as that of the comparison example. The gas sensor 300 can therefore prevent infrared transmittance in the particular wavelength region from decreasing to improve an S/N ratio in comparison with the das sensor of the comparison example. It is also possible to prevent infrared light passing through an optical filter from entering not a light receiver facing the optical filter but another light receiver, thereby suppressing occurrence of crosstalk. As a result, an improvement in measurement accuracy can be expected. The distance between the sample cell 3 and the photodetector 2 in the direction of the central axis OX of the sample cell 3 is preferably short, more preferably zero.

The air-conditioning control system according to the embodiment is not limited to the configuration of FIG. 1. The number of each of ventilation fans 100, human sensors 200 and gas sensors 300 installed in each room may be changed based on a size or layout of the corresponding room, or the like. The air-conditioning control system may have a configuration shown in FIG. 32, for example.

As shown in FIG. 33, the air-conditioning control system may have a configuration in which the control panel 400 is connected, via respective individual signal lines L2, with each ventilation fan 100, each human sensor 200, each gas sensor 300 and each composite sensor device 250.

(Embodiment 2)

An air-conditioning control system according to the present embodiment will be hereinafter explained with reference to FIG. 34. Like kind elements are assigned the same reference numerals as depicted in Embodiment 1, and explanation thereof is omitted.

In the air-conditioning control system according to the embodiment, wireless receivers 500 are connected to a power supply line L1 and a signal line L2. Human sensors 200, gas sensors 300, and composite sensor devices 250 are wireless human sensors, wireless gas sensors, and wireless composite sensors, each of which is configured to transmit a wireless output signal to a wireless receiver 500.

Each of the human sensors 200, the gas sensors 300, and the composite sensor devices 250 may include a battery as a power supply in a housing (not shown), or may be configured to be energized by an external power supply or the like. Examples of the battery include a lithium battery, a lithium-ion battery and the like.

The air-conditioning control system according to the embodiment can have higher flexibility in an installation location of each of the human sensors 200, the gas sensors 300, and the composite sensor devices 250, thereby facilitating installation working in comparison with the air-conditioning control system according to Embodiment 1..

(Embodiment 3)

An air-conditioning control system according to the present embodiment will be hereinafter explained with reference to FIG. 35. Like kind elements are assigned the same reference numerals as depicted in Embodiment 1, and explanation thereof is omitted.

The air-conditioning control system according to the embodiment excludes the control panel 400 (see FIG. 1) in the air-conditioning control system according to Embodiment 1. Instead, each of ventilation fans 100, human sensors 200, and gas sensors 300 is connected to a power supply line L11. The power supply line L11 is a line used to apply a prescribed voltage from an external power supply (not shown) to each of the ventilation fans 100, the human sensors 200, and the gas sensors 300. Examples of the prescribed voltage include DC 12V, AC 100V and the like.

In the air-conditioning control system according to the embodiment, a human sensor 200 and a gas sensor 300 are connected to a ventilation fan 100 through a signal line L12, per room. Each ventilation fan 100 in the air-conditioning control system according to the embodiment doubles as a control device configured to control the ventilation fan 100 based on an output signal of a corresponding human sensor 200 and an output signal of a corresponding gas sensor 300.

(Embodiment 4)

An air-conditioning control system according to the present embodiment will be hereinafter explained with reference to FIG. 36. Like kind elements are assigned the same reference numerals as depicted in Embodiment 1, and explanation thereof is omitted.

The air-conditioning control system according to the embodiment excludes the control panel 400 (see FIG. 1) in the air-conditioning control system according to Embodiment 1. Instead, each of ventilation fans 100 is connected to a power supply line L11. The power supply line L11 is a line used to apply a prescribed voltage from an external power supply (not shown) to each of the ventilation fans 100. Examples of the prescribed voltage include DC 12V, AC 100V and the like.

Each ventilation fan 100 in the air-conditioning control system according to the embodiment includes a wireless receiver 110. Human sensors 200, gas sensors 300, and composite sensor devices 250 are wireless human sensors, wireless gas sensors, and wireless composite sensor devices, each of which is configured to transmit a wireless output signal to a corresponding wireless receiver 110. Each wireless receiver 110 in the air-conditioning control system according to the embodiment doubles as a control device configured to control a corresponding ventilation fan 100 based on an output signal of a corresponding human sensor 200 and an output signal of a corresponding gas sensor(s) 300.

Each of the human sensors 200, the gas sensors 300, and the composite sensor devices 250 may include a battery as a power supply in a housing (not shown), or may be configured to be energized by an external power supply or the like. Examples of the battery include a lithium battery, a lithium-ion battery and the like.

The air-conditioning control system according to the embodiment can have higher flexibility in an installation location of each of the human sensors 200, the gas sensors 300, and the composite sensor devices 250, thereby facilitating installation working in comparison with the air-conditioning control system according to Embodiment 1.

(Embodiment 5)

An air-conditioning control system according to the present embodiment will be hereinafter explained with reference to FIG. 37. Like kind elements are assigned the same reference numerals as depicted in Embodiment 1, and explanation thereof is omitted.

The air-conditioning control system according to the embodiment excludes the control panel 400 (see FIG. 1) in the air-conditioning control system according to Embodiment 1. Instead, each of ventilation fans 100 is connected to a power supply line L11. The power supply line L11 is a line used to apply a prescribed voltage from an external power supply (not shown) to each of the ventilation fans 100. Examples of the prescribed voltage include DC 12V, AC 100V and the like.

The air-conditioning control system according to the embodiment includes, for each ventilation fan 100, a wireless receiver 500 connected thereto via a signal line L13. Human sensors 200, gas sensors 300, and composite sensor devices 250 are wireless human sensors, wireless gas sensors, and wireless composite sensor devices, each of which is configured to transmit a wireless output signal to a corresponding wireless receiver 500. Each wireless receiver 500 in the air-conditioning control system according to the embodiment doubles as a control device configured to control a corresponding ventilation fan 100 based on an output signal of a corresponding human sensor 200 and an output signal of a corresponding gas sensor(s) 300.

Each of the human sensors 200, the gas sensors 300, and the composite sensor devices 250 may include a battery as a power supply in a housing (not shown), or may be configured to be energized by an external power supply or the like. Examples of the battery include a lithium battery, a lithium-ion battery and the like.

The air-conditioning control system according to the embodiment can have higher flexibility in an installation location of each of the human sensors 200, the gas sensors 300, and the composite sensor devices 250, thereby facilitating installation working in comparison with the air-conditioning control system according to Embodiment 1.

Although the present invention has been described with reference to certain preferred embodiments, numerous modifications and variations can be made by those skilled in the art without departing from the true spirit and scope of this invention, namely claims.

## Claims

**1.** An air-conditioning control system, comprising:

a ventilation fan;
a human sensor configured to perform human presence detection;
a gas sensor configured to measure concentration of carbon dioxide; and
a control device configured to control the ventilation fan based on an output signal of the human sensor and an output signal of the gas sensor, wherein
the control device is configured to control the ventilation fan to change an amount of ventilation by the ventilation fan based on the output signal of the human sensor when the concentration of carbon dioxide measured with the gas sensor is below a first threshold.

**2.** The air-conditioning control system of claim 1, wherein the control device is configured to control and operate the ventilation fan regardless of the output signal of the human sensor when the concentration of carbon dioxide measured with the gas sensor is the first threshold or more.

**3.** The air-conditioning control system of claim 1 or 2, wherein the control device is configured, when the concentration of carbon dioxide measured with the gas sensor is below the first threshold, to control the ventilation fan so that the amount of ventilation by the ventilation fan when the human sensor detects human absence becomes smaller than the amount of ventilation by the ventilation fan when the human sensor detects human presence.

**4.** The air-conditioning control system of claim 3, wherein the control device is configured, when the concentration of carbon dioxide measured with the gas sensor is below the first threshold, to control to stop the ventilation fan when the human sensor detects human absence.

**5.** The air-conditioning control system of any one of claims 1 to 4, wherein the control device is configured to control the ventilation fan to change the amount of ventilation by the ventilation fan based on the output signal of the human sensor when the concentration of carbon dioxide measured with the gas sensor is below a second threshold that is lower than the first threshold.

**6.** The air-conditioning control system of claim 5, wherein the control device is configured, when the concentration of carbon dioxide measured with the gas sensor is below the second threshold, to control the ventilation fan so that the amount of ventilation by the ventilation fan when the human sensor detects human absence becomes smaller than the amount of ventilation by the ventilation fan when the human sensor detects human presence.

**7.** The air-conditioning control system of claim 6, wherein the control device is configured, when the concentration of carbon dioxide measured with the gas sensor is below the second threshold, to control to stop the ventilation fan when the human sensor detects human absence.

**8.** The air-conditioning control system of any one of claims 1 to 7, wherein the control device is configured, when the concentration of carbon dioxide measured with the gas sensor is the first threshold or more, to control the ventilation fan so that the amount of ventilation by the ventilation fan when the human sensor detects human presence becomes greater than he amount of ventilation by the ventilation fan when the human sensor detects human absence.

**9.** The air-conditioning control system of any one of claims 5 to 7, wherein the control device is configured, when the concentration of carbon dioxide measured with the gas sensor is the second threshold or more, to control the ventilation fan so that the amount of ventilation by the ventilation fan when'the human sensor detects human presence becomes greater than he amount of ventilation by the ventilation fan when the human sensor detects human absence.

**10.** The air-conditioning control system of any one of claims 1 to 9, wherein the gas sensor comprises:

a light source;
a photodetector comprising
a first optical filter which has a transmission band for transmitting infrared light containing an absorption wavelength of carbon dioxide,
a first light receiver which is disposed at an opposite side of the first optical filter from the light source,
a second optical filter which has a transmission band, without overlapping with the first optical filter, for transmitting infrared light having a reference wavelength as a non-absorption wavelength of carbon dioxide, and
a second light receiver which is disposed at an opposite side of the second optical filter from the light source;
a sample cell disposed between the light source and the photodetector; and
a signal processor configured to acquire the concentration of carbon dioxide based on a difference or a ratio between an output signal of the first light receiver and an output signal of the second light receiver.

**11.** The air-conditioning control system of claim 10, wherein
the sample cell is shaped like a tube an inner face of which is a reflection surface for reflecting infrared light emitted from the light source,

the reflection surface is in a shape of a spheroid a rotation axis of which is a major axis defined as a central axis of the sample cell, both ends of the spheroid in a direction of the major axis being cut by two planes perpendicular to the major axis,
the light source is disposed in vicinity of one focal point of the spheroid on the central axis, and
the photodetector is disposed at a position nearer to the light source than another focal point of the spheroid on the central axis.

**12.** The air-conditioning control system of any one of claims 1 to 11, wherein the control device is configured, when operating the ventilation fan, to more decrease the amount of ventilation as the concentration of carbon dioxide measured with the gas sensor is lower.

**13.** The air-conditioning control system of any one of claims 1 to 12, wherein the first threshold is set to permissible concentration of carbon dioxide in a room in which the gas sensor is installed.

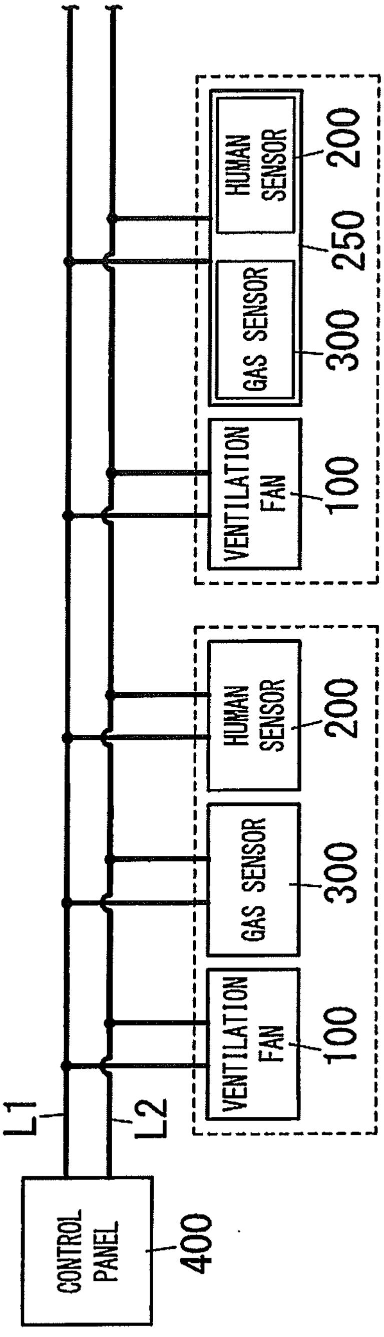
CONTROL PANEL
400
L1
L2
VENTILATION FAN
100
GAS SENSOR
300
HUMAN SENSOR
200
VENTILATION FAN
100
GAS SENSOR
300
250
HUMAN SENSOR
200

FIG. 1

FIG. 2A

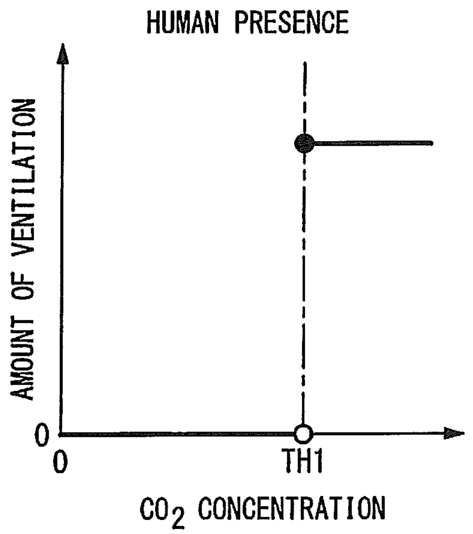


FIG. 2B

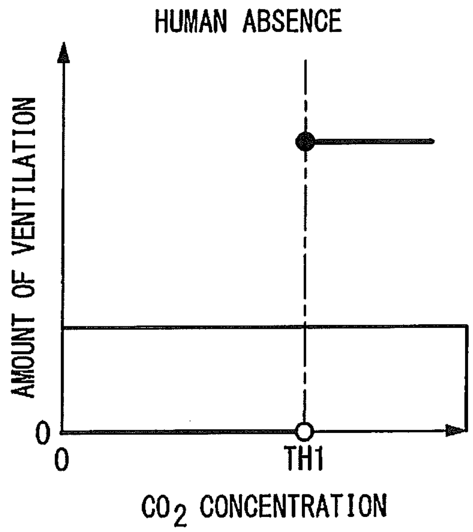


FIG. 3A

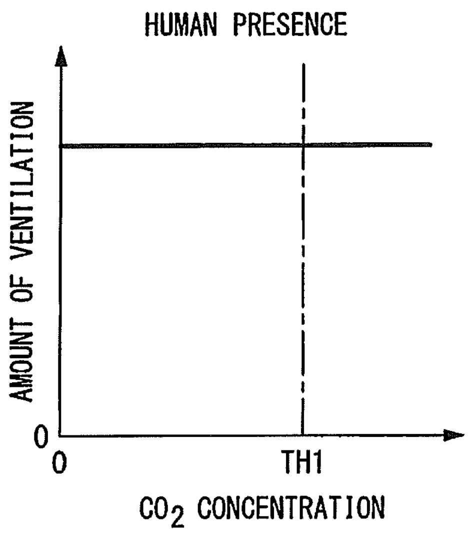


FIG. 3B

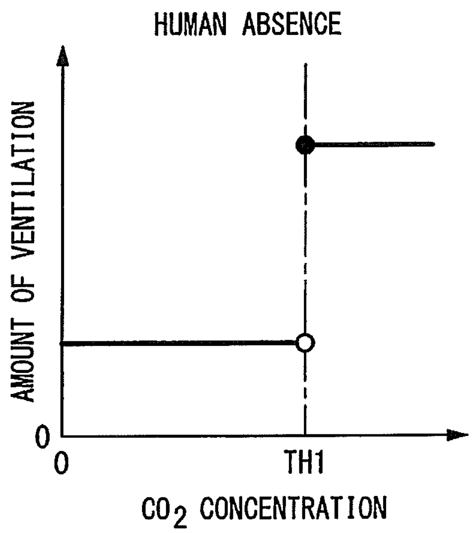

*FIG. 4A*

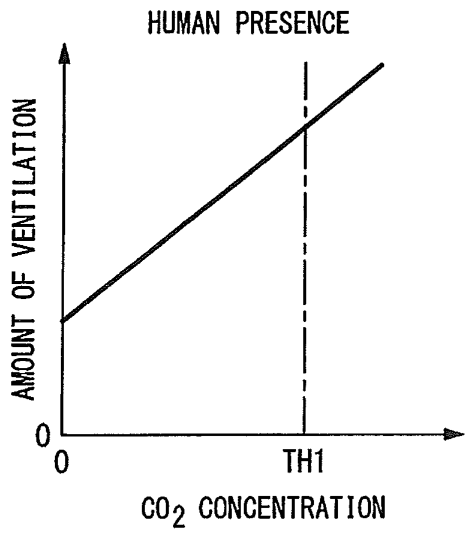


*FIG. 4B*

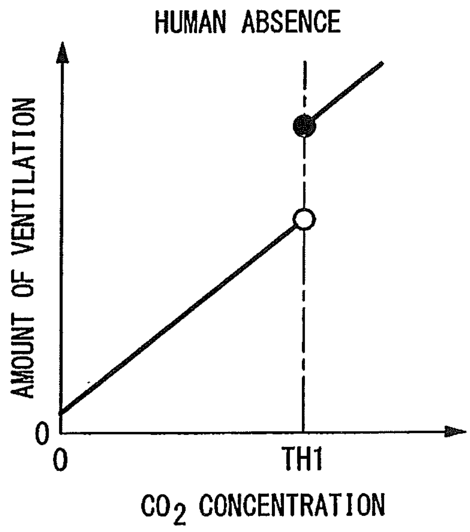


*FIG. 5A*

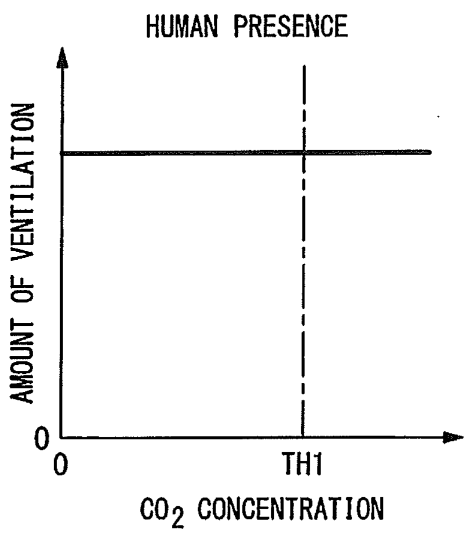


*FIG. 5B*

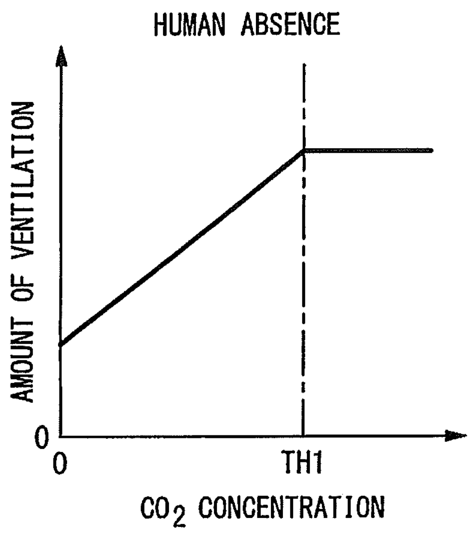

FIG. 6A

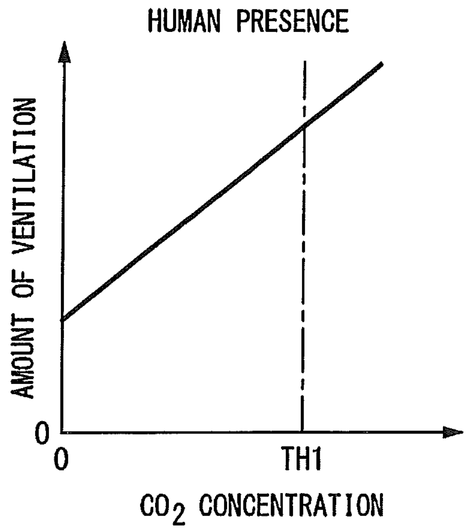


FIG. 6B

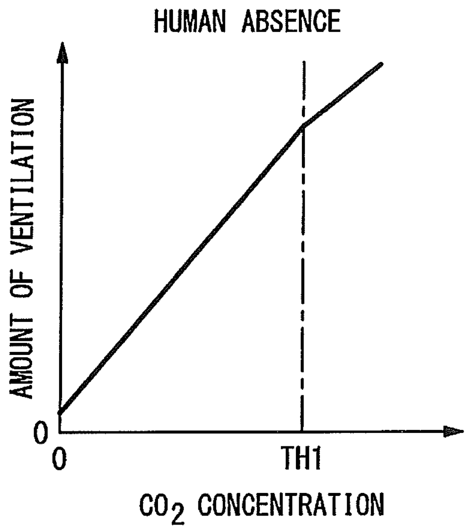


FIG. 7A

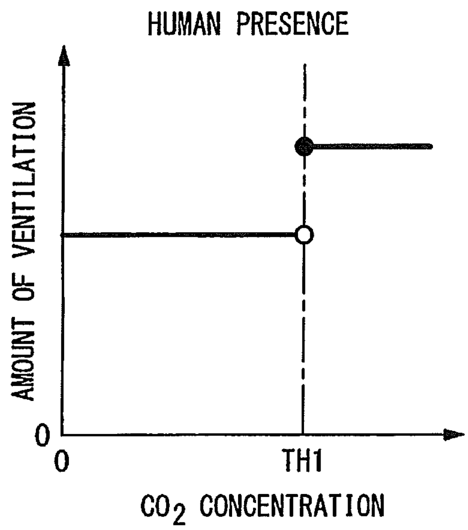


FIG. 7B

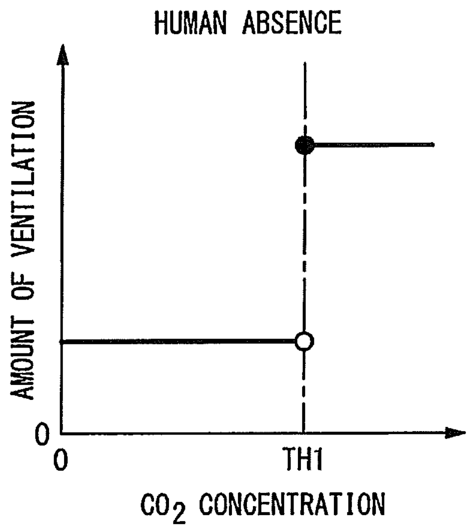

FIG. 8A

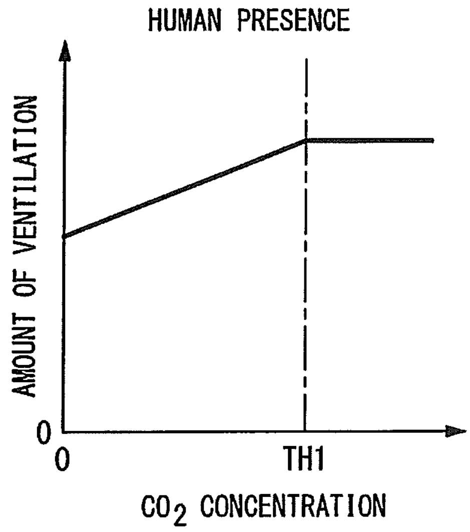


FIG. 8B

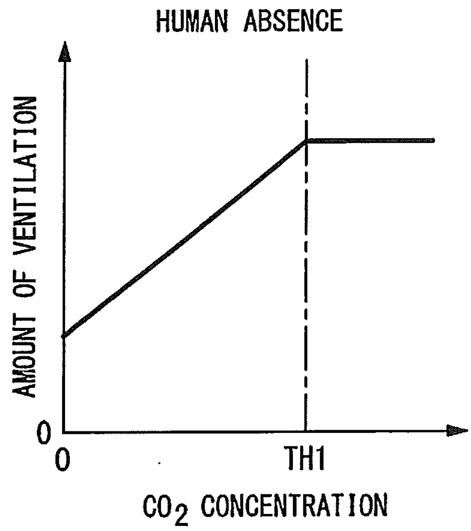


FIG. 9A

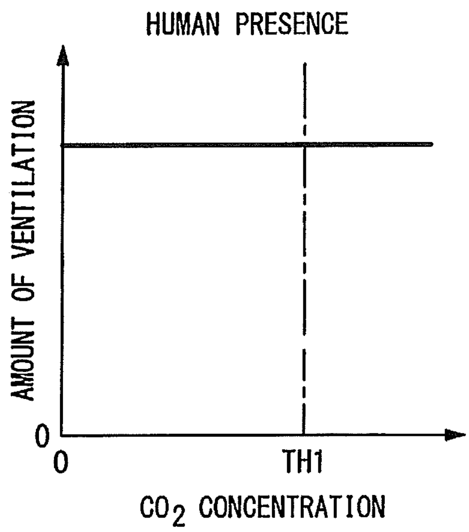


FIG. 9B

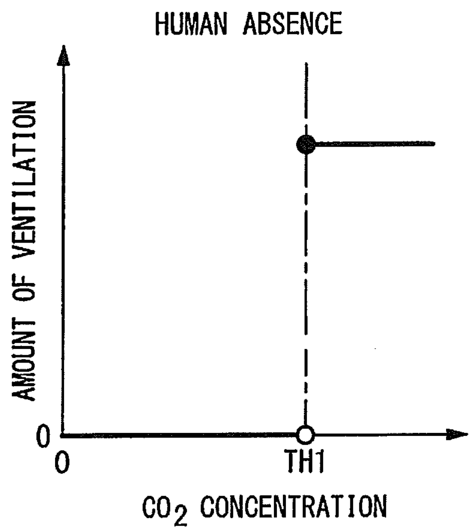

FIG. 10A

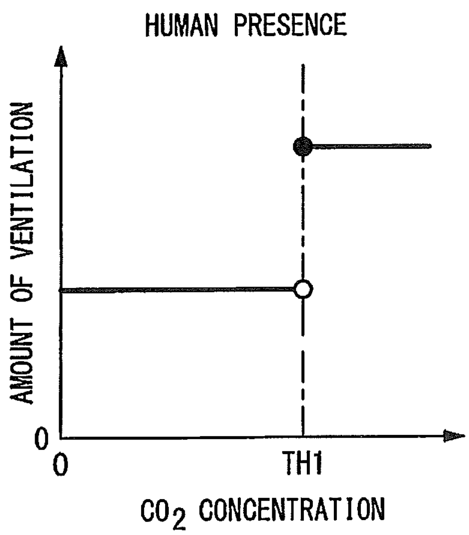


FIG. 10B

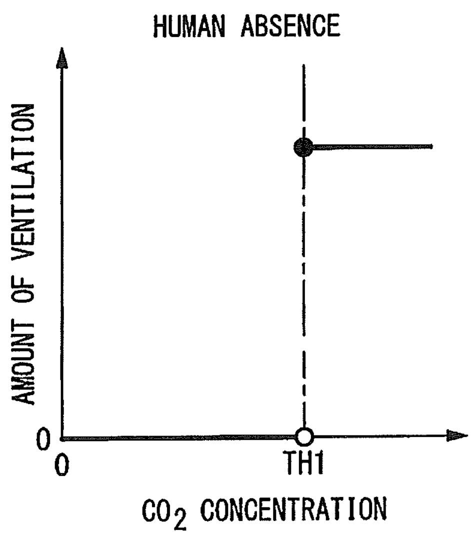


FIG. 11A

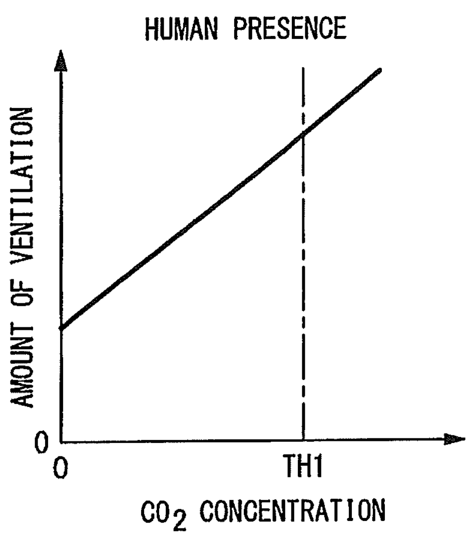


FIG. 11B

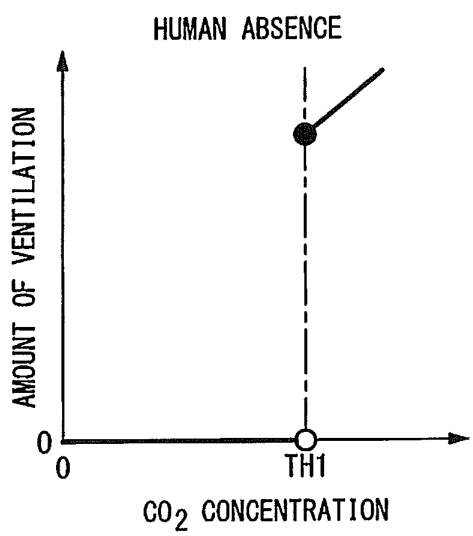

FIG. 12A

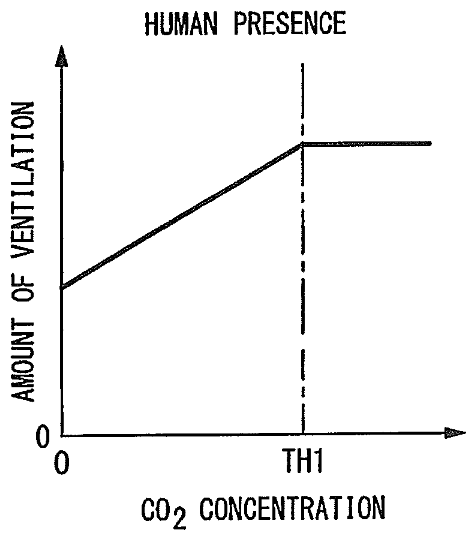


FIG. 12B

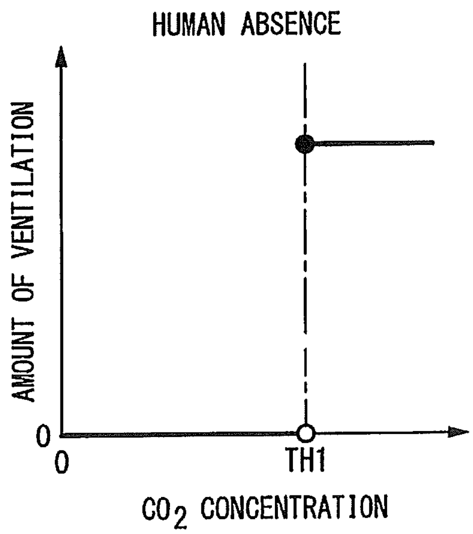


FIG. 13A

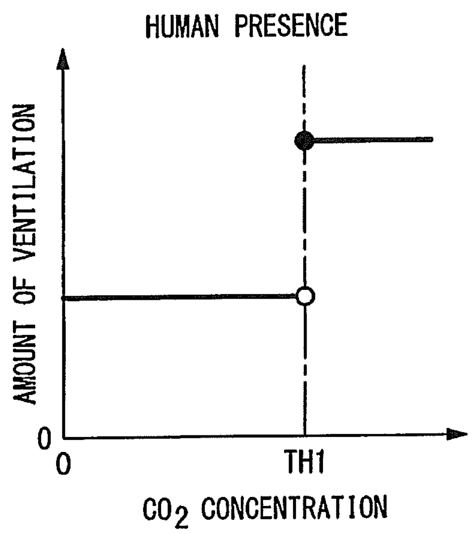


FIG. 13B

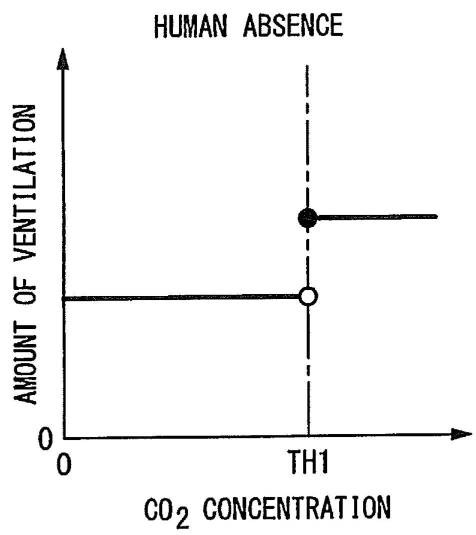

FIG. 14A

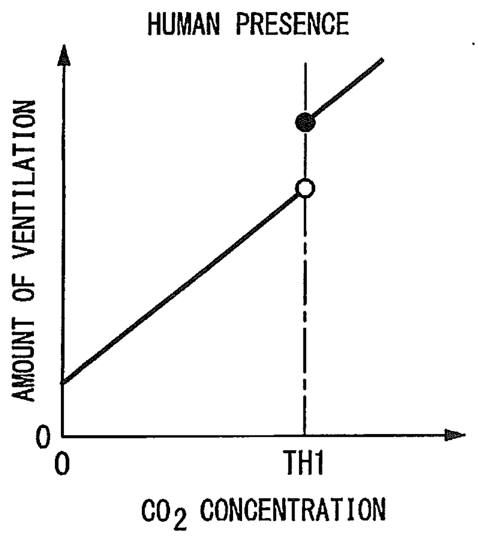


FIG. 14B

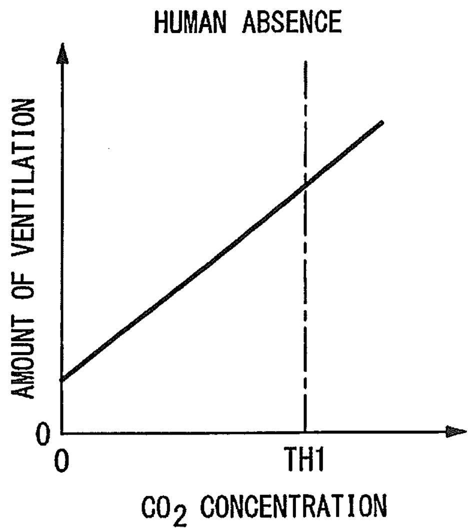


FIG. 15A

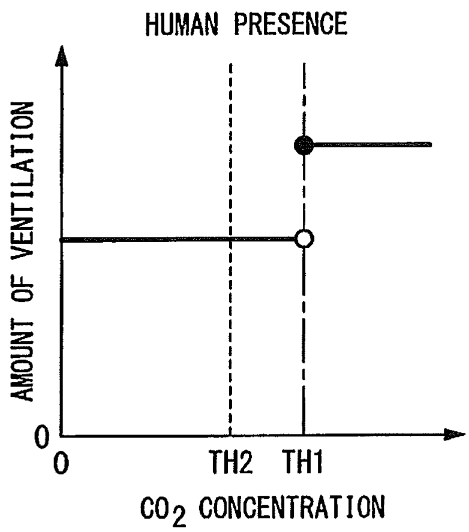


FIG. 15B

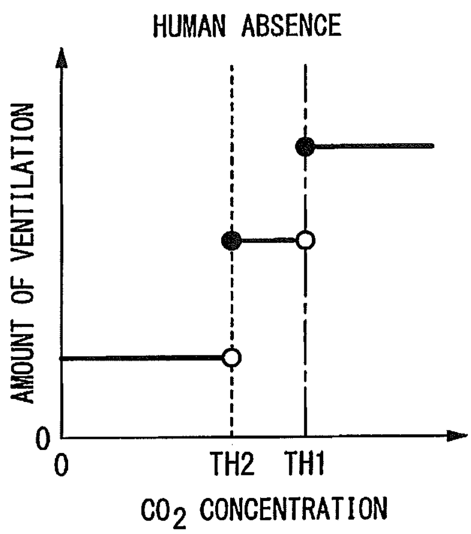

*FIG. 16A*

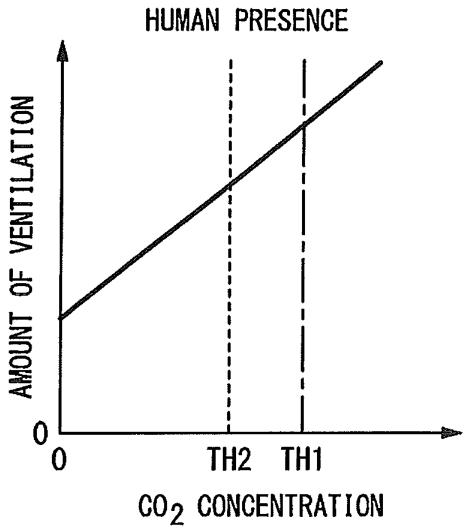


*FIG. 16B*

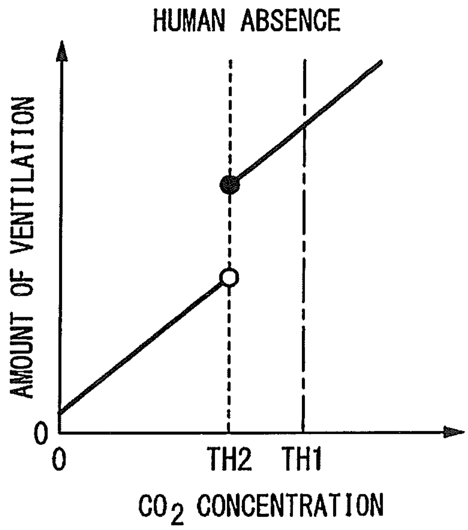


*FIG. 17A*

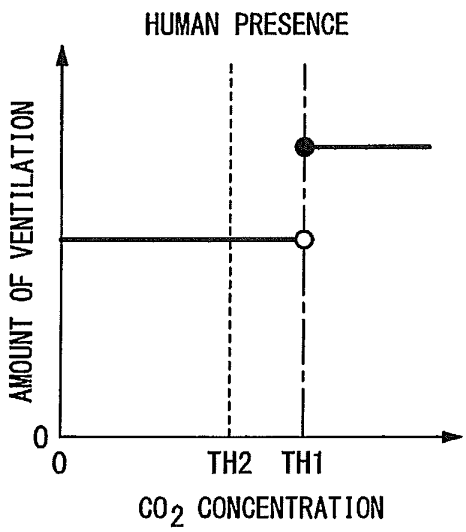


*FIG. 17B*

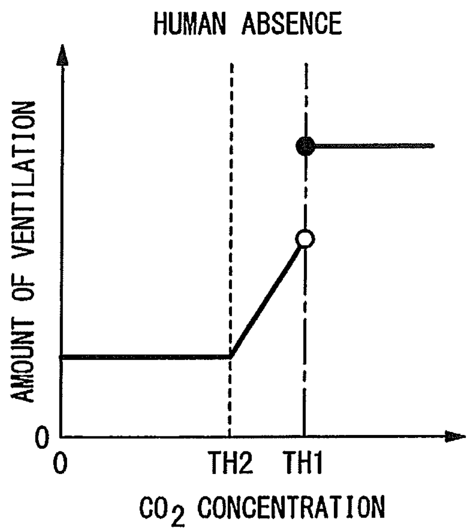

FIG. 18A

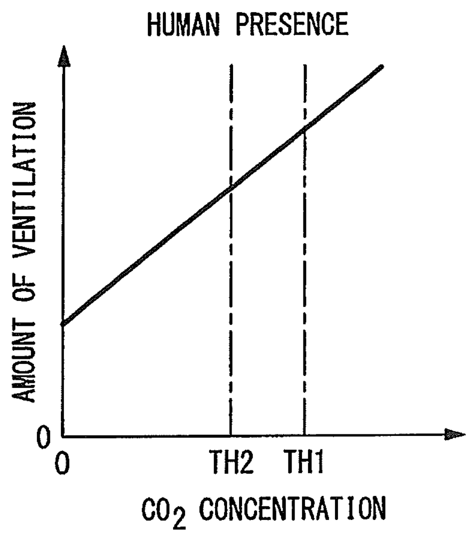


FIG. 18B

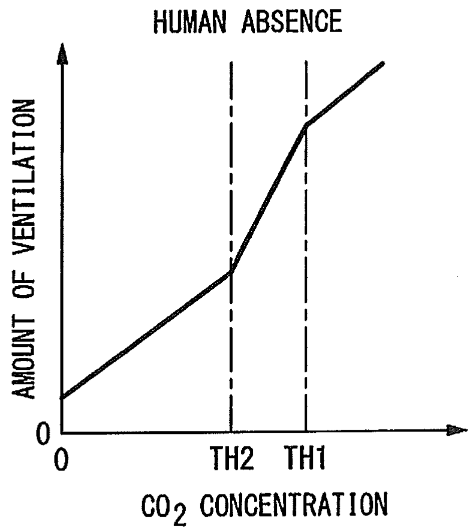


FIG. 19A

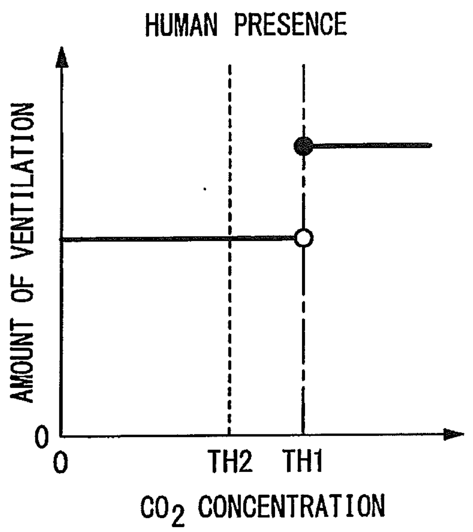


FIG. 19B

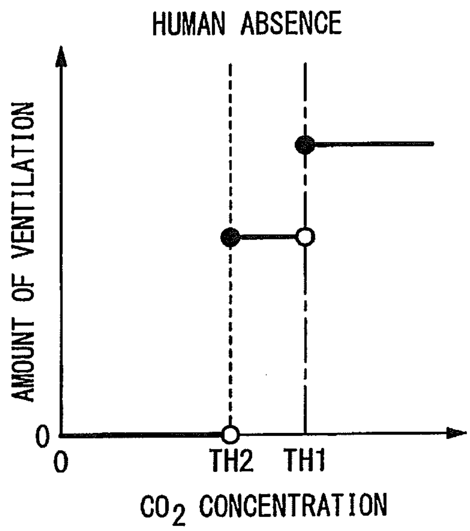

FIG. 20A

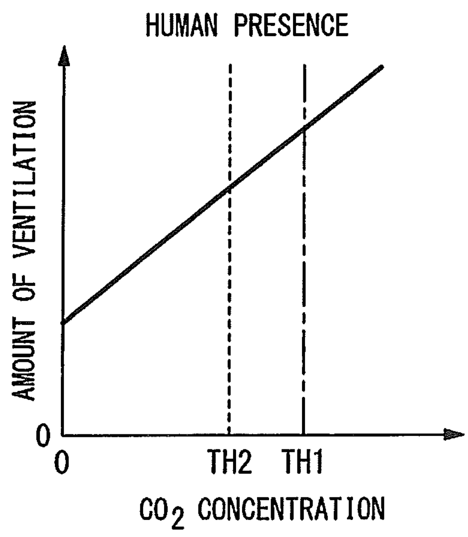


FIG. 20B

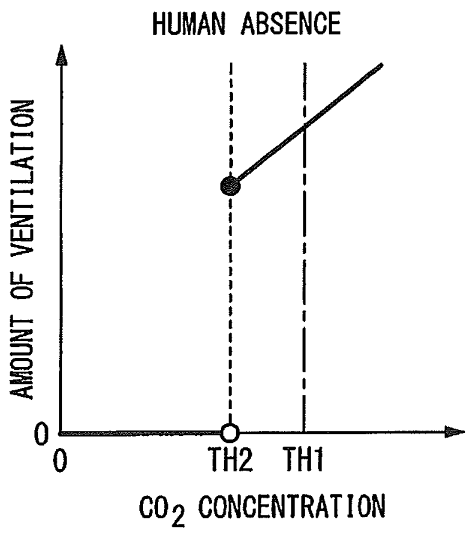


FIG. 21A

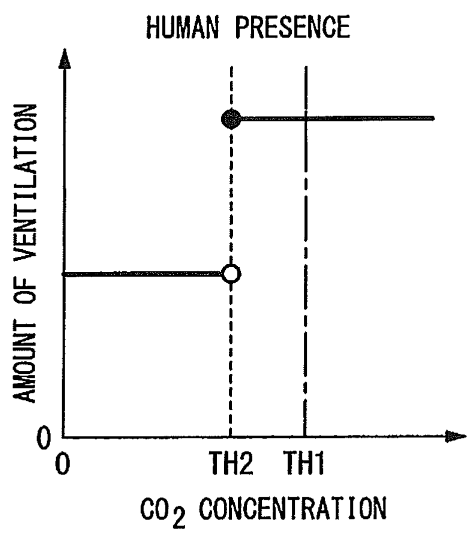


FIG. 21B

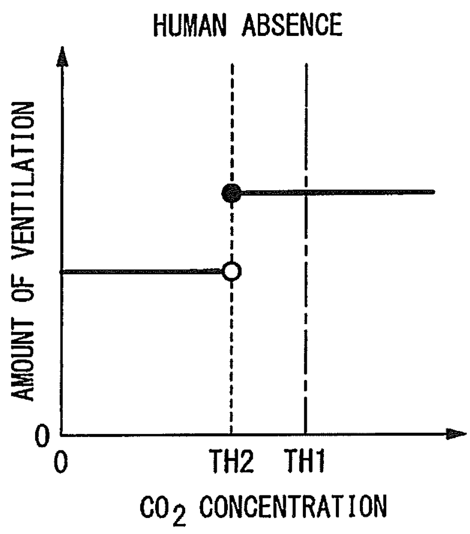

FIG. 22A

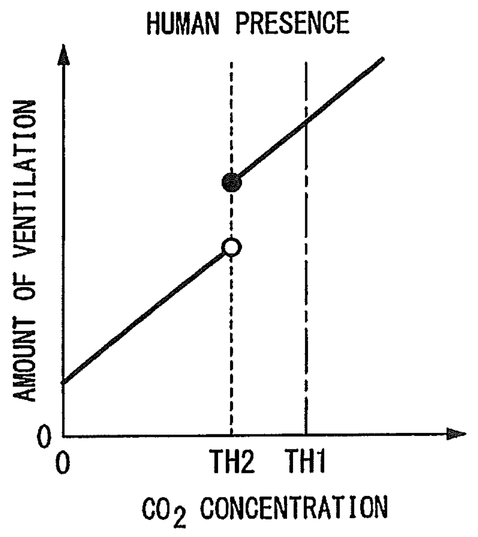


FIG. 22B

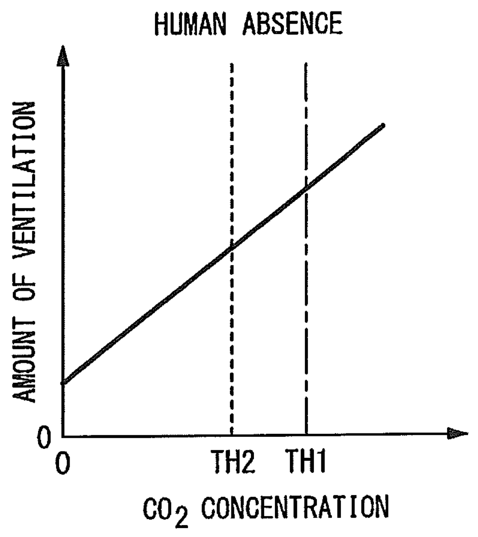


FIG. 23A

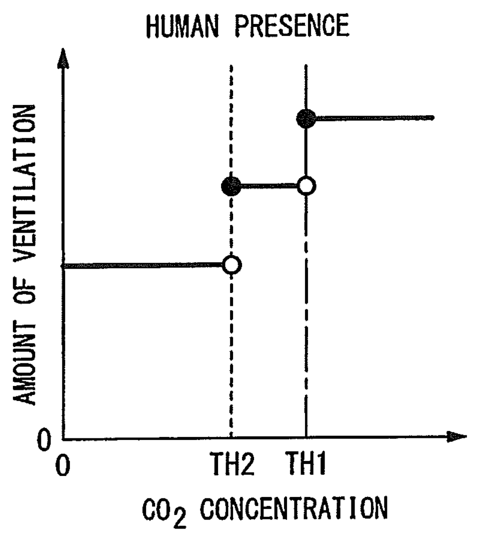


FIG. 23B

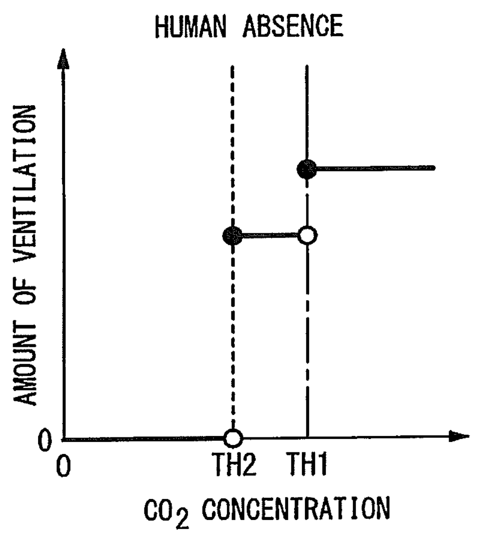

FIG. 24

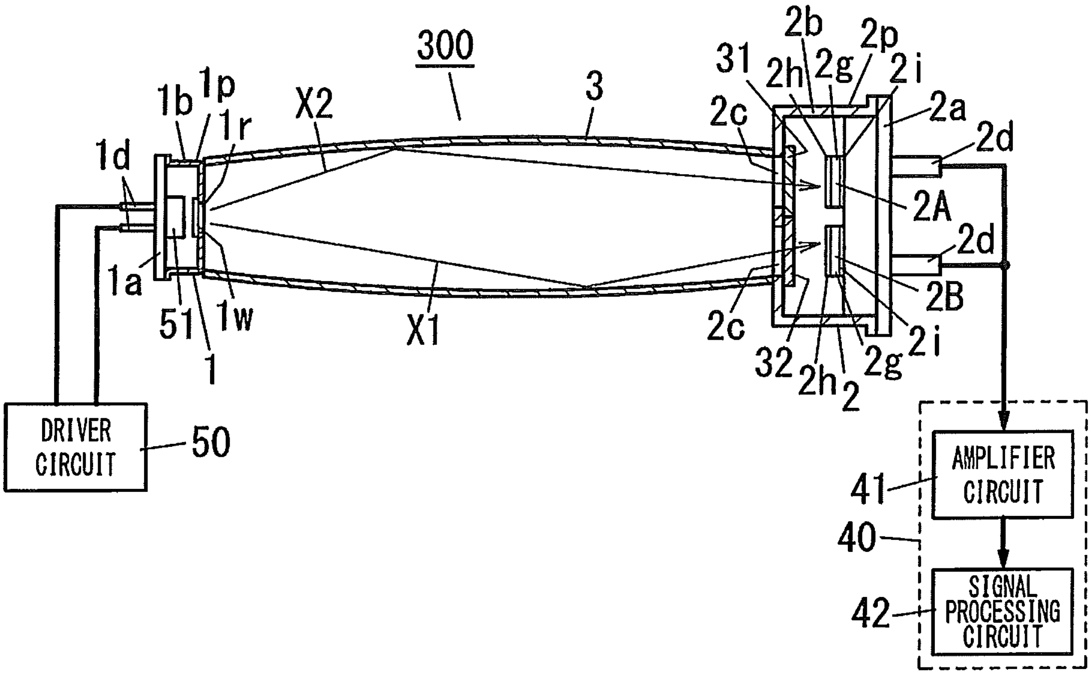
300
3
X2
X1
1d
1b
1p
1r
1a
51
1w
1
31
2b
2h
2g
2p
2i
2a
2c
2d
2A
2B
32
2h
2
2g
DRIVER CIRCUIT
50
AMPLIFIER CIRCUIT
41
40
SIGNAL PROCESSING CIRCUIT
42

FIG. 25

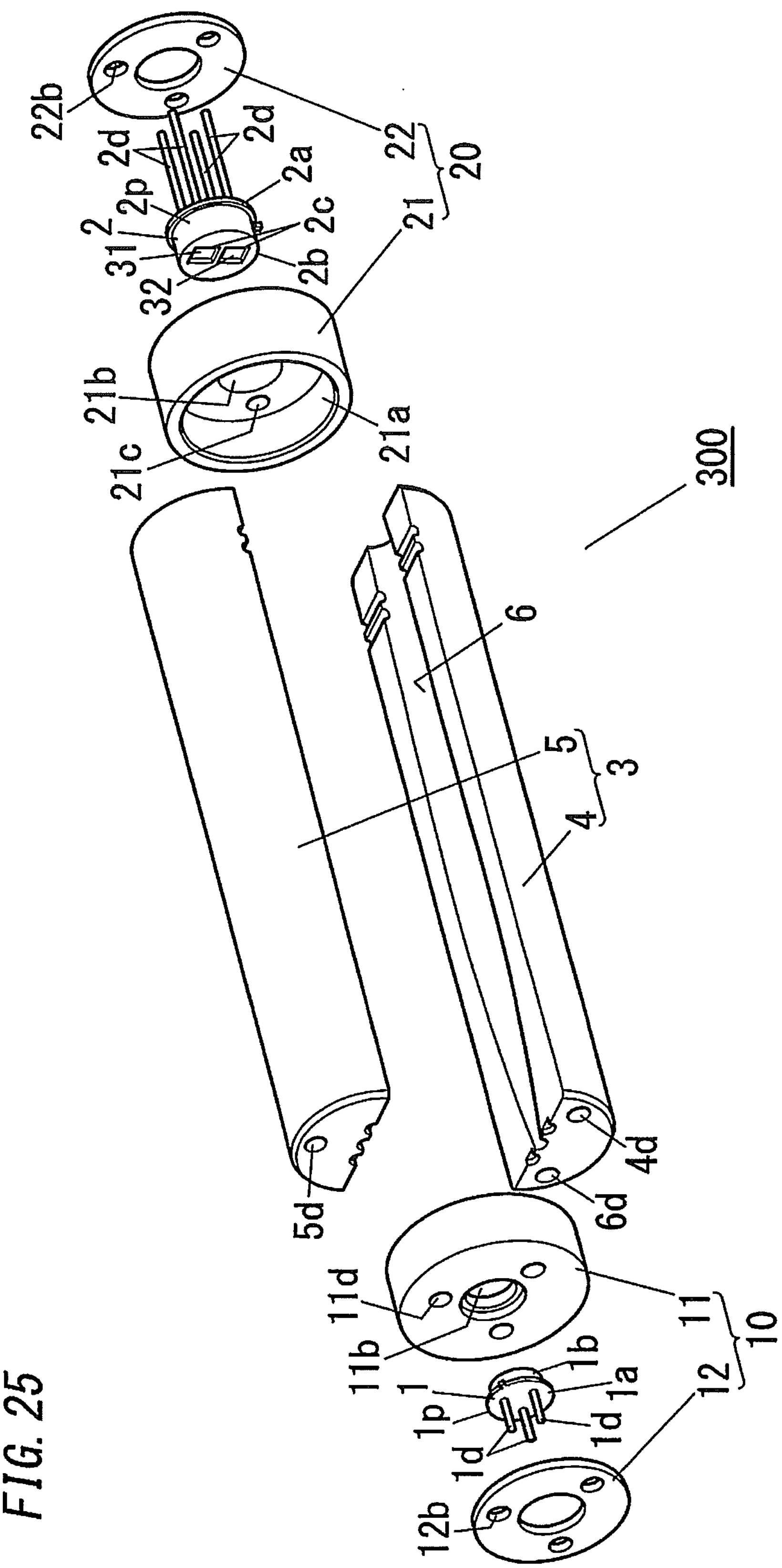

22b
22
20
2d
2d
2a
21
2p
2
2c
31
2b
32
21b
21a
21c
300
6
5
3
4
4d
6d
5d
11d
11
10
11b
1b
1
1a
1p
1d
1d
12
12b

FIG. 26 A

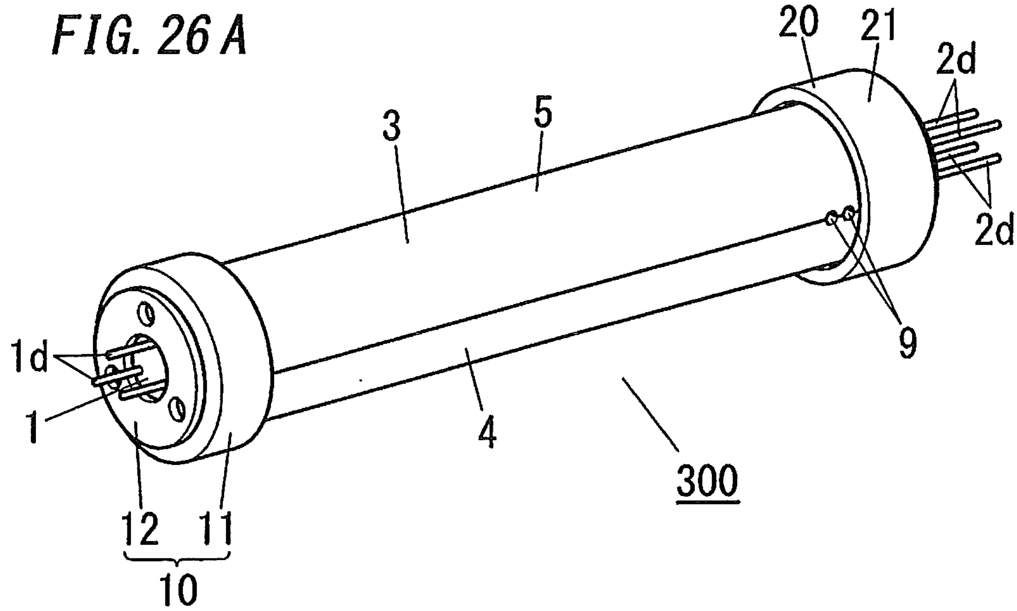


FIG. 26 B

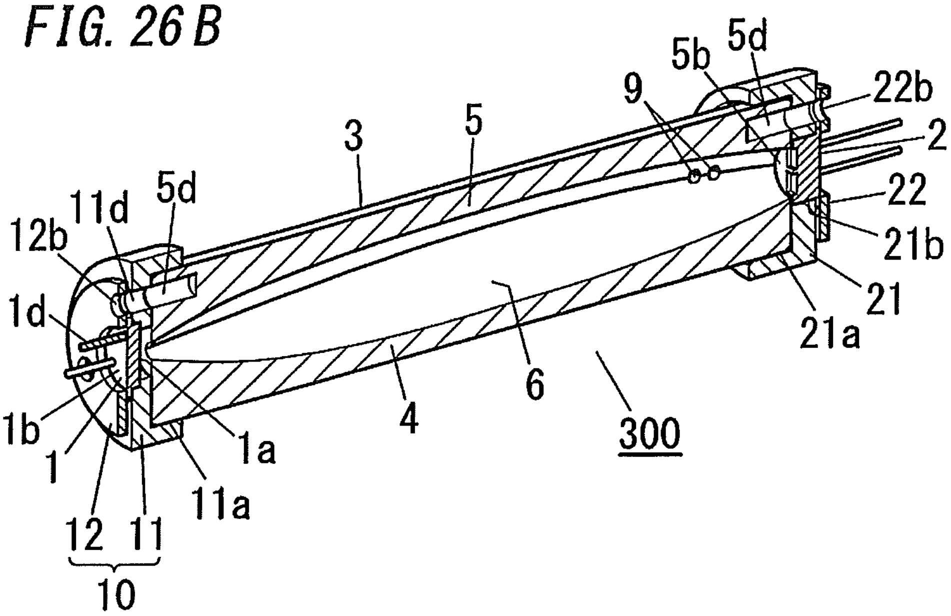

FIG. 27

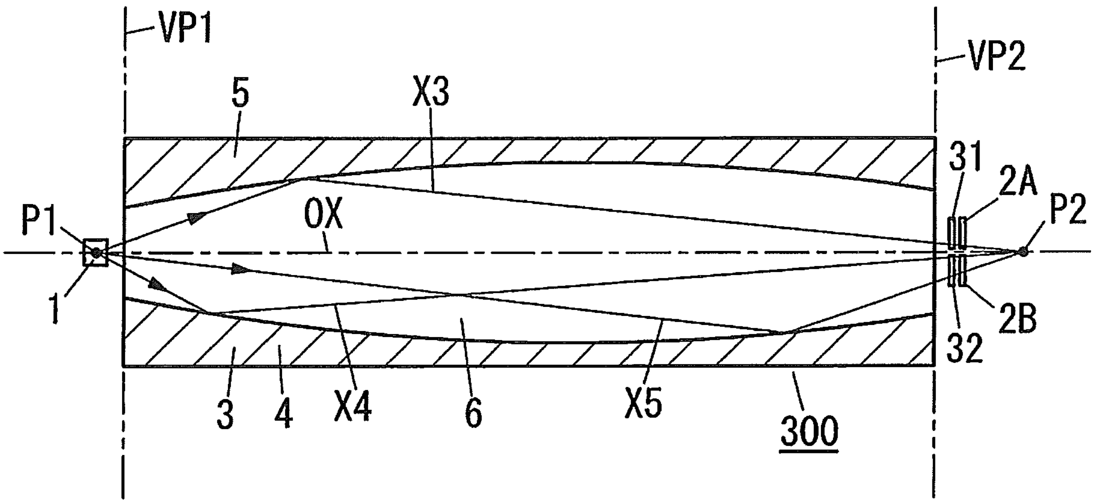

FIG. 28 A

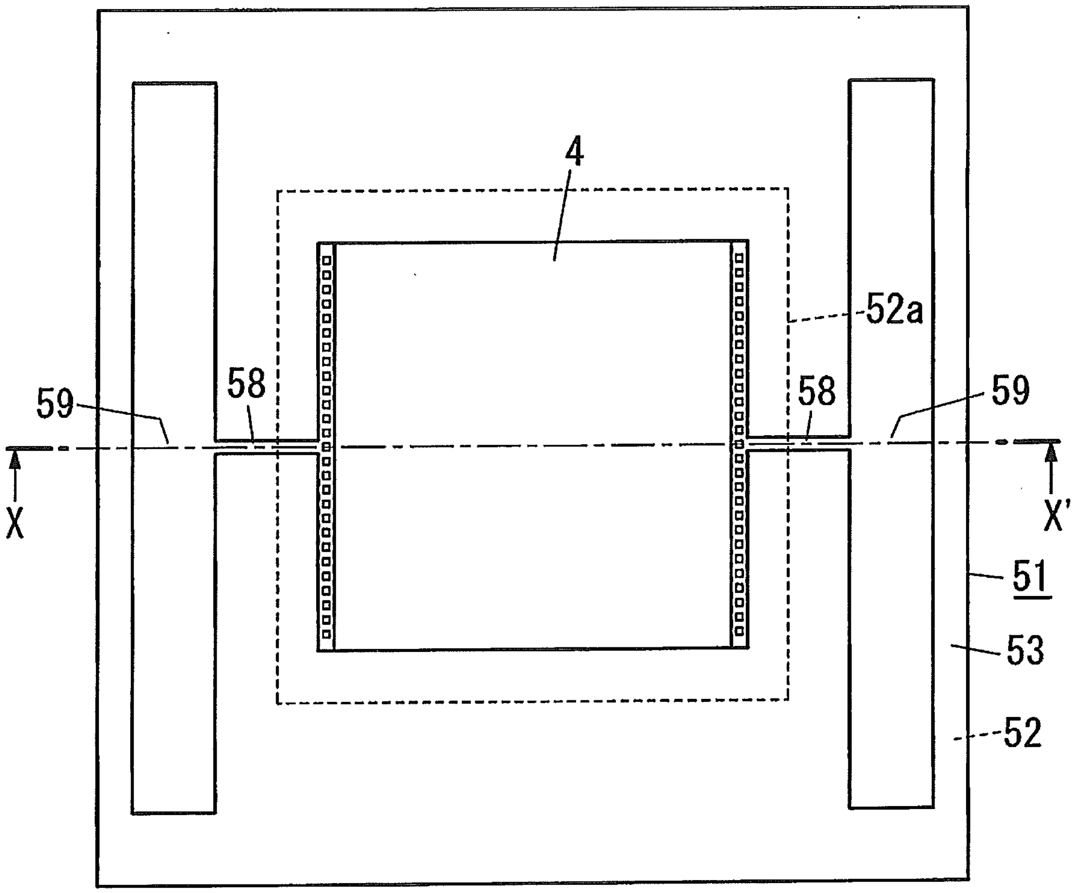


FIG. 28 B

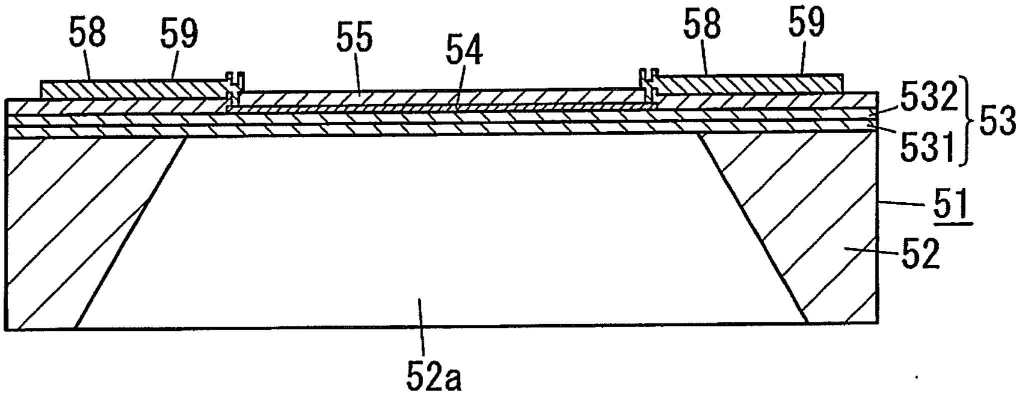

FIG. 29

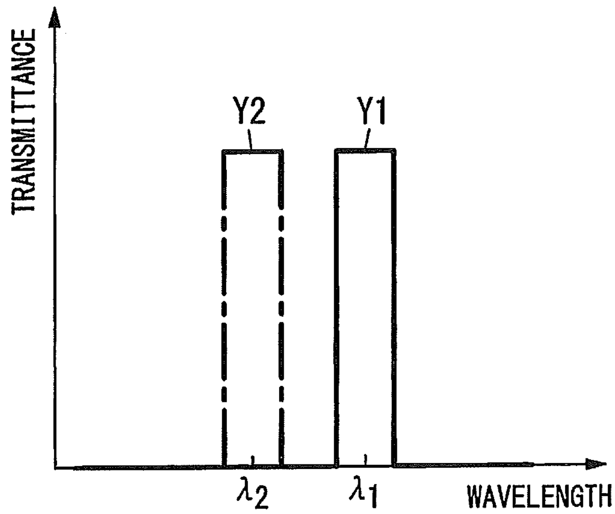
TRANSMITTANCE
Y2
Y1
$\lambda_2$
$\lambda_1$
WAVELENGTH

FIG. 30

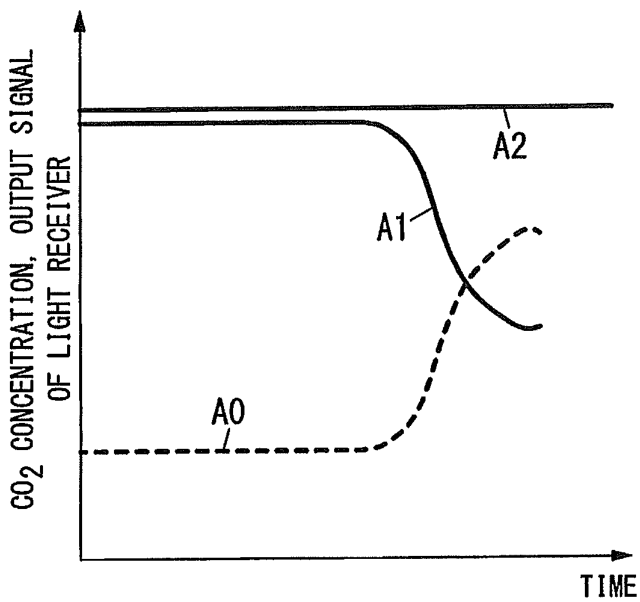
$CO_2$ CONCENTRATION, OUTPUT SIGNAL OF LIGHT RECEIVER
A2
A1
A0
TIME

FIG. 31

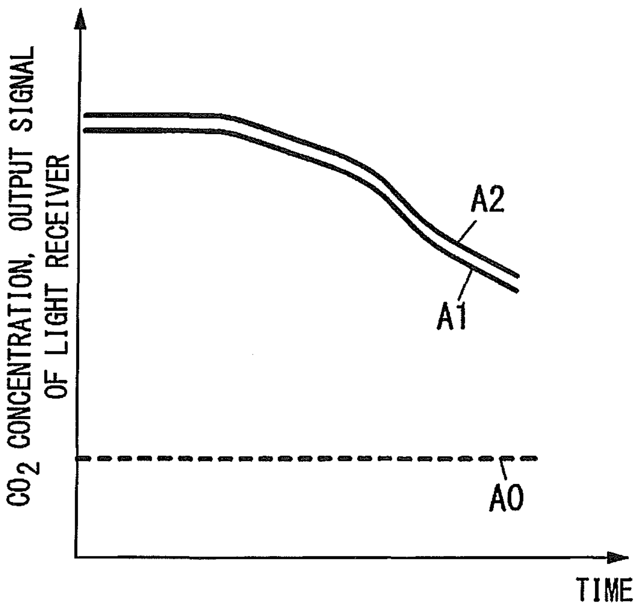
$CO_2$ CONCENTRATION, OUTPUT SIGNAL OF LIGHT RECEIVER
A2
A1
A0
TIME

FIG. 32

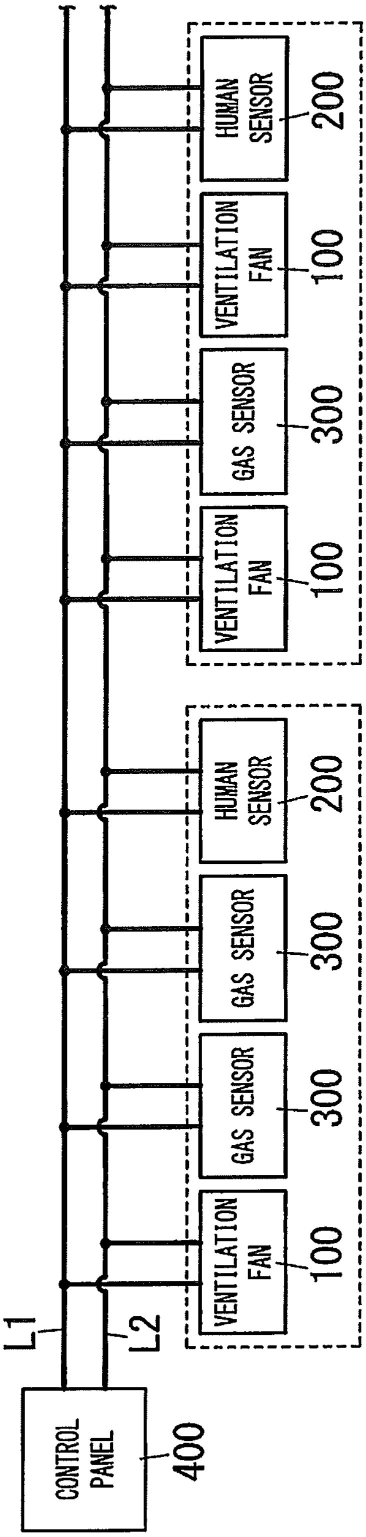

CONTROL PANEL
400
L1
L2
VENTILATION FAN
100
GAS SENSOR
300
GAS SENSOR
300
HUMAN SENSOR
200
VENTILATION FAN
100
GAS SENSOR
300
VENTILATION FAN
100
HUMAN SENSOR
200

FIG. 33

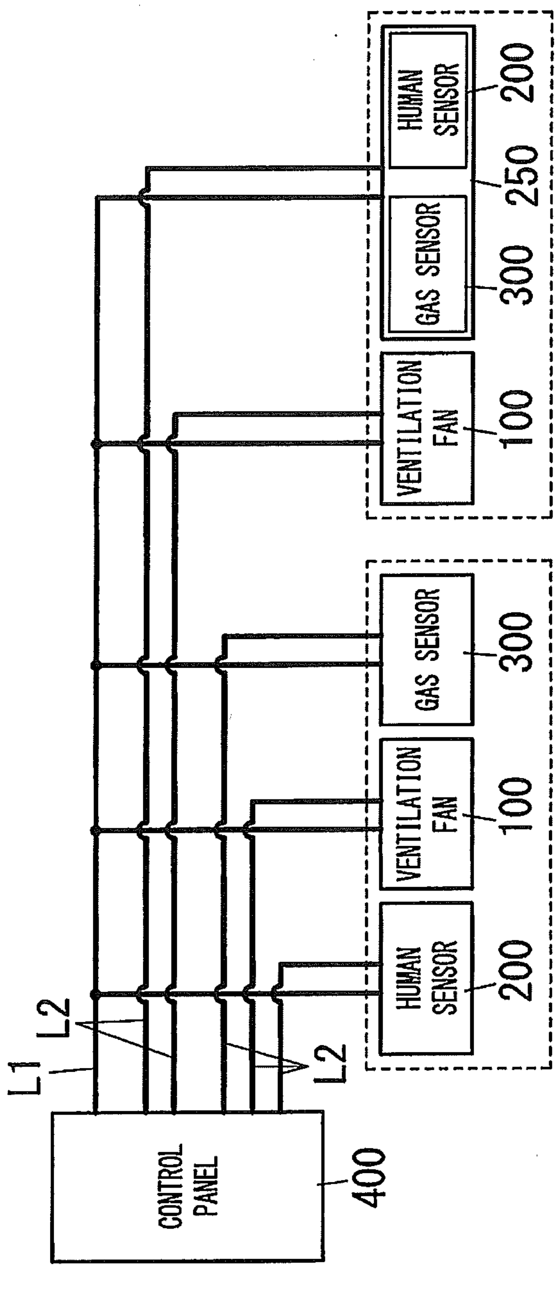
CONTROL PANEL
400
L1
L2
L2
HUMAN SENSOR
200
VENTILATION FAN
100
GAS SENSOR
300
VENTILATION FAN
100
GAS SENSOR
300
250
HUMAN SENSOR
200

FIG. 34

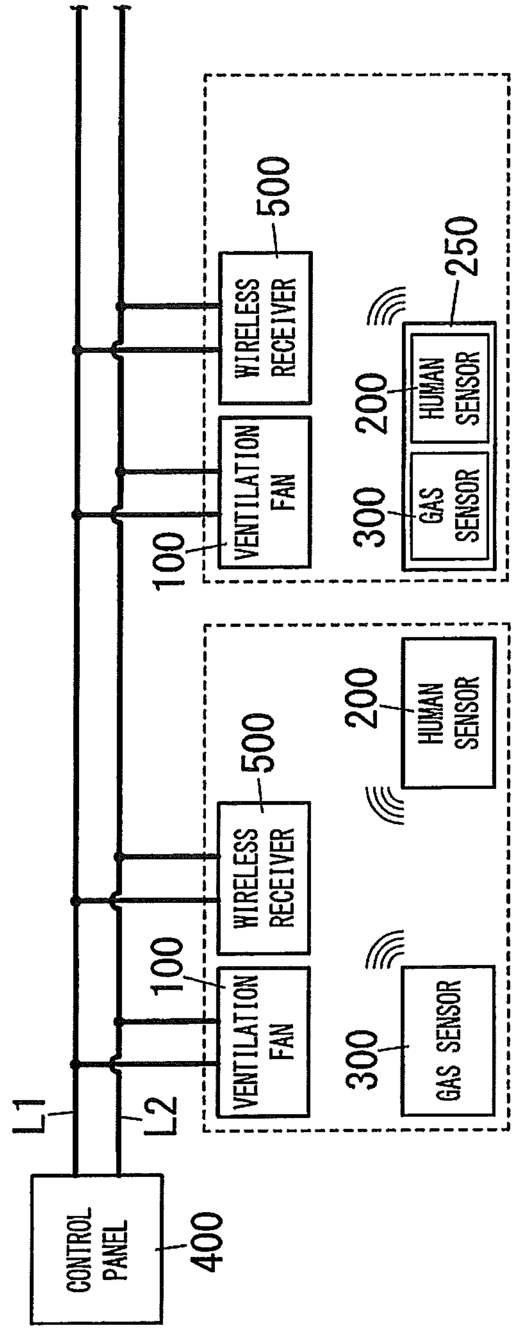
CONTROL PANEL
400
L1
L2
VENTILATION FAN
100
WIRELESS RECEIVER
500
GAS SENSOR
300
HUMAN SENSOR
200
VENTILATION FAN
100
WIRELESS RECEIVER
500
GAS SENSOR
300
HUMAN SENSOR
200
250

FIG. 35

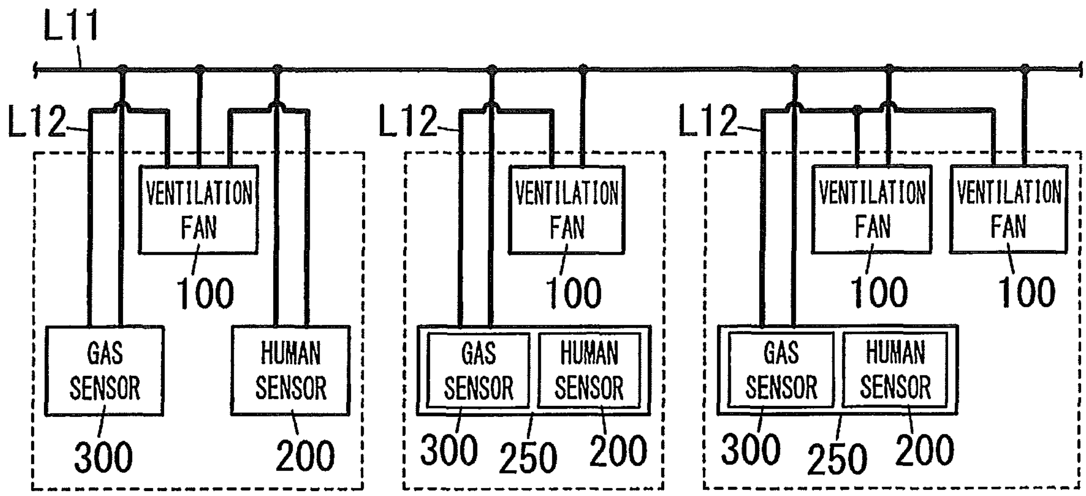
L11
L12
VENTILATION FAN
100
GAS SENSOR
300
HUMAN SENSOR
200
L12
VENTILATION FAN
100
GAS SENSOR
HUMAN SENSOR
300
250
200
L12
VENTILATION FAN
100
VENTILATION FAN
100
GAS SENSOR
HUMAN SENSOR
300
250
200

FIG. 36

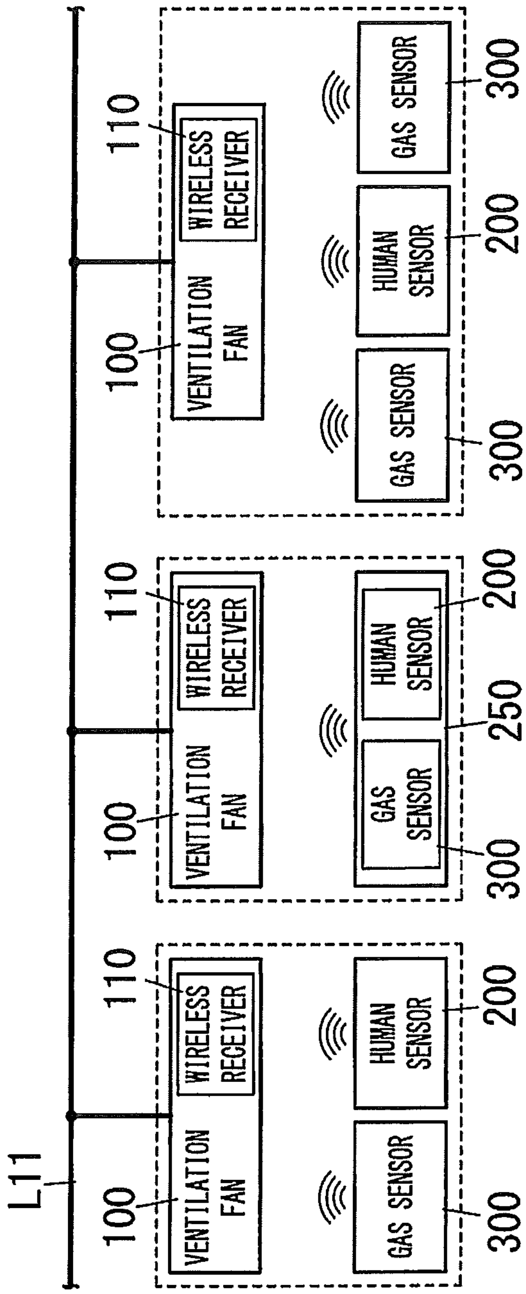
L11
100
VENTILATION FAN
110
WIRELESS RECEIVER
GAS SENSOR
300
HUMAN SENSOR
200
100
VENTILATION FAN
110
WIRELESS RECEIVER
GAS SENSOR
300
250
HUMAN SENSOR
200
100
VENTILATION FAN
110
WIRELESS RECEIVER
GAS SENSOR
300
HUMAN SENSOR
200
GAS SENSOR
300

FIG. 37

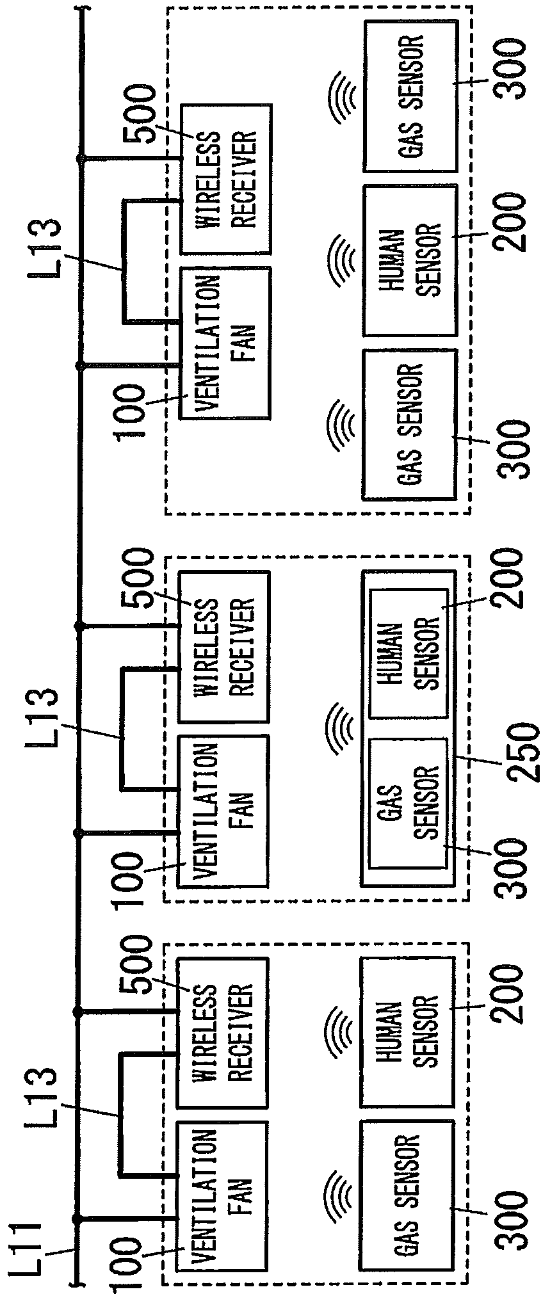
L11
L13
100
500
VENTILATION FAN
WIRELESS RECEIVER
GAS SENSOR
HUMAN SENSOR
300
200
L13
100
500
VENTILATION FAN
WIRELESS RECEIVER
GAS SENSOR
HUMAN SENSOR
300
250
200
L13
100
500
VENTILATION FAN
WIRELESS RECEIVER
GAS SENSOR
HUMAN SENSOR
GAS SENSOR
300
200
300

## INTERNATIONAL SEARCH REPORT

International application No.
PCT/JP2013/007048

A. CLASSIFICATION OF SUBJECT MATTER
*F24F7/007*(2006.01)i, *F24F11/02*(2006.01)i

According to International Patent Classification (IPC) or to both national classification and IPC

B. FIELDS SEARCHED

Minimum documentation searched (classification system followed by classification symbols)
F24F7/007, F24F11/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2007-085698 A (Fuji Electric Systems Co., Ltd.), 05 April 2007 (05.04.2007), paragraphs [0014] to [0015], [0021] (Family: none) | 1-13 |
| Y | JP 10-118435 A (Matsushita Seiko Co., Ltd.), 12 May 1998 (12.05.1998), claims 1, 3; paragraph [0022] (Family: none) | 1-13 |
| Y | JP 2012-220353 A (Panasonic Corp.), 12 November 2012 (12.11.2012), paragraphs [0023], [0041]; fig. 7 & WO 2012/140482 A1 & TW 201243313 A1 | 10,11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 January, 2014 (30.01.14) | 10 February, 2014 (10.02.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2013/007048

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-147613 A (Tyco Electronics Raychem GmbH), 14 June 2007 (14.06.2007), claims 1, 2 & US 2007/0114421 A1 & EP 1790969 A1 & DE 102005055860 B3 | 11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6109313 A